# EUROPEAN PATENT APPLICATION

(11) **EP 4 683 408 A1**
(43) Date of publication of application: **21.01.2026**
(21) Application number: 24791972.3
(22) Date of filing: 15.04.2024
(51) Int. Cl.: H04W 72/0446

(54) **COMMUNICATION METHOD, AND APPARATUS**

(30) Priority: 19.04.2023 CN 202310445518
(71) Applicant: Huawei Technologies Co., Ltd., Shenzhen, Guangdong 518129 (CN)
(72) Inventor: WEN, Xuan, Shenzhen, Guangdong 518129 (CN); MA, Jingwang, Shenzhen, Guangdong 518129 (CN)
(74) Representative: Pfenning, Meinig & Partner mbB
(86) International application number: PCT/CN2024/087834
(87) International publication number: WO 2024/217387

(57) **Abstract**

A communication method and apparatus are provided, to ensure an MTP latency in an XR service. A first device determines a first latency of at least one uplink PDU set, where the at least one uplink PDU set corresponds to a first downlink frame, and any one of the at least one uplink PDU set includes at least one uplink PDU data packet. If the first device determines that the first latency is greater than a first preset threshold, the first device sends latency adjustment request information to a second device, where the latency adjustment request information includes the first latency, and the latency adjustment request information is used to request to adjust configuration information of a downlink latency based on the first latency. The second device adjusts the configuration information of the downlink latency based on the first latency. Therefore, an RTT latency can be controlled at a PDU set granularity, so as to ensure an MTP latency, thereby improving user experience.

## Description

### CROSS-REFERENCE TO RELATED APPLICATIONS

This application claims priority to Chinese Patent Application No. 202310445518.5, filed with the China National Intellectual Property Administration on April 19, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

The development of 5G drives the exponential growth of media services. Video services have become the mainstream media form, and emerging multimedia services such as extended reality (extended reality, XR) have emerged.

XR enables the coexistence and interaction between physical objects in the real world and digital objects in the virtual world through auxiliary devices, ultimately achieving a seamless fusion of the virtual and the real. Currently, XR mainly includes virtual reality (virtual reality, VR), augmented reality (augmented reality, AR), and mixed reality (mixed reality, MR). A typical service procedure of an XR service mainly includes collection of operation instructions, uplink transmission of instruction information, rendering/encoding of video images, downlink transmission of video images, decoding and displaying on a terminal, and other processing processes.

Latencies have a direct impact on the image refresh quality and the user interaction of the XR service, with a motion-to-photon (motion-to-photon, MTP) latency being a deterministic indicator that needs to be met. If the MTP latency cannot meet the requirements, users may experience dizziness, severely impacting the user experience. Therefore, how to ensure an MTP latency is an urgent problem to be resolved.

### SUMMARY

This application provides a communication method and apparatus, to ensure an MTP latency in a service such as an XR service.

According to a first aspect, this application provides a communication method. The method may be applied to a first device or a processor, a chip, or a functional module in the first device. The method may include: determining a first latency of at least one uplink protocol data unit (protocol data unit, PDU) set; and if the first latency is greater than a first preset threshold, sending latency adjustment request information, where the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; and the latency adjustment request information includes the first latency, and the latency adjustment request information is used to request to adjust configuration information of a downlink latency based on the first latency.

With the foregoing method, a round-trip time (round-trip time, RTT) latency can be controlled at a PDU set granularity, so as to ensure an MTP latency, thereby improving user experience during use of an XR service such as XR game, XR telemedicine, or XR remote education, cloud game, or the like. For example, during real-time data transmission of the XR service such as XR game or XR remote education, cloud game, or the like, a downlink latency may be adjusted based on an uplink latency, so that the uplink and downlink latencies meet the latency requirement, thereby ensuring smoothness of game or teaching videos, and improving user experience. For another example, in XR telemedicine, during quality inspection, maintenance, or test of an XR device, a downlink latency may be adjusted based on an uplink latency, so that the uplink and downlink latencies meet the latency requirement, and the XR device ensures real-time transmission of medical images when being used for XR telemedicine, thereby improving user experience.

In a possible design, a method for determining the first latency of the at least one uplink PDU set may be: obtaining a first transmission latency of the uplink PDU data packet from an access network device; obtaining a first time from the access network device and recording a second time; and determining the first latency based on the first transmission latency, the first time, and the second time. The first transmission latency is a transmission latency of the uplink PDU data packet included in the at least one uplink PDU set between the terminal device and the access network device. The first time is a time at which the access network device receives a first uplink PDU data packet of a first one of the at least one uplink PDU set, and the second time is a time at which the first device receives a last uplink PDU data packet of a last one of the at least one uplink PDU set. In this way, the first latency can be accurately determined.

In a possible design, a method for obtaining the first time from the access network device may be: receiving, from the access network device, the uplink PDU data packet included in the at least one uplink PDU set, where a general packet radio service GPRS tunneling protocol GTP field of the uplink PDU data packet included in the at least one uplink PDU set carries the first time; and obtaining the first time carried in the GTP field of the uplink PDU data packet included in the at least one uplink PDU set; or receiving first information from the access network device, where the first information includes the first time. In this way, the first time can be flexibly obtained.

In a possible design, the first latency of the at least one uplink PDU set may be determined by using the following method: The first device obtains a third time from an access network device and records a second time, and determines the first latency based on the third time and the second time. The third time is a time at which the terminal device sends a first uplink PDU data packet of a first one of the at least one uplink PDU set, and the second time is a time at which the first device receives a last uplink PDU data packet of a last one of the at least one uplink PDU set. In this way, the first latency can be accurately determined.

In a possible design, the third time may be obtained from the access network device by using the following method: receiving, from the access network device, the uplink PDU data packet included in the at least one uplink PDU set, where a general packet radio service GPRS tunneling protocol GTP field of the uplink PDU data packet included in the at least one uplink PDU set carries the third time; and obtaining the third time carried in the GTP field of the uplink PDU data packet included in the at least one uplink PDU set; or receiving, from the access network device, second information originating from the terminal device, where the second information includes the third time. In this way, the third time can be flexibly obtained.

In a possible design, at least one downlink PDU data packet included in the downlink frame is received, where at least one of the at least one downlink PDU data packet includes an identifier of the at least one uplink PDU set; and the at least one uplink PDU set is determined based on the identifier of the at least one uplink PDU set that is included in the at least one downlink PDU data packet. In this way, uplink and downlink data can be associated based on the identifier of the at least one uplink PDU set that is included in the at least one downlink PDU data packet.

In a possible design, the first latency of the at least one uplink PDU set may be determined by using the following method: obtaining, from the access network device, a first transmission latency of the uplink PDU data packet included in the at least one uplink PDU set; obtaining a first time and a second time based on the identifier of the at least one uplink PDU set; and determining the first latency based on the first transmission latency, the first time, and the second time. The first transmission latency is a transmission latency of the uplink PDU data packet included in the at least one uplink PDU set between the terminal device and the access network device. The first time is a time at which the access network device receives a first uplink PDU data packet of a first one of the at least one uplink PDU set, and the second time is a time at which the first device receives a last uplink PDU data packet of a last one of the at least one uplink PDU set. In this way, the first latency can be accurately determined.

In a possible design, a method for obtaining the first time and the second time based on the identifier of the at least one uplink PDU set may be: determining an identifier of the first one of the at least one uplink PDU set and an identifier of the last one of the at least one uplink PDU set based on the identifier of the at least one uplink PDU set; obtaining the first time based on the identifier of the first one of the at least one uplink PDU set and a first information set; and obtaining the second time based on the identifier of the last one of the at least one uplink PDU set and the first information set, where the first information set includes a correspondence between an identifier of each of the at least one uplink PDU set, a time at which the access network device receives a first uplink PDU data packet of each of the at least one uplink PDU set, and a time at which the first device receives a last uplink PDU data packet of each of the at least one uplink PDU set. In this way, the first time and the second time can be accurately determined based on the locally stored first information set.

In a possible design, the identifier of each of the at least one uplink PDU set and the time at which the access network device receives the first uplink PDU data packet of each of the at least one uplink PDU set are obtained from the access network device, and the time at which the last uplink PDU data packet of each of the at least one uplink PDU set is received is recorded; and the first information set is stored. In this way, the first time and the second time can be accurately determined subsequently based on the locally stored first information set.

In a possible design, a method for determining the first latency based on the first transmission latency, the first time, and the second time may be: determining a second transmission latency based on the first time and the second time; and determining the first latency based on the first transmission latency and the second transmission latency. In this way, the first latency can be accurately determined.

In a possible design, the first latency of the at least one uplink PDU set may be determined by using the following method: determining a third transmission latency of the uplink PDU data packet included in the at least one uplink PDU set; determining a fourth transmission latency based on a time interval and a sampling period; and determining the first latency based on the third transmission latency and the fourth transmission latency. The third transmission latency is a transmission latency of the uplink PDU data packet included in the at least one uplink PDU set between the terminal device and the first device. The time interval is a time interval at which the terminal device sends every two uplink PDU sets, and a value of the sampling period is equal to a quantity of the at least one uplink PDU set. In this way, the first latency can be accurately determined.

In a possible design, a method for determining the fourth transmission latency based on the time interval and the sampling period may be: multiplying the time interval by the sampling period to obtain the fourth transmission latency.

In a possible design, the time interval and the sampling period that originate from a third device are obtained, so that the fourth transmission latency can be subsequently determined based on the time interval and the sampling period.

In a possible design, response information is received, where the response information includes configuration information of an adjusted downlink latency. In this way, data is transmitted based on the adjusted downlink latency.

According to a second aspect, this application provides a communication method. The method may be applied to a second device or a processor, a chip, or a functional module in the second device. The method may include: receiving latency adjustment request information, where the latency adjustment request information includes a first latency; and adjusting configuration information of a downlink latency based on the first latency. The first latency is a transmission latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service.

With the foregoing method, a round-trip time (round-trip time, RTT) latency can be controlled at a PDU set granularity, so as to ensure an MTP latency, thereby improving user experience during use of an XR service such as XR game, XR telemedicine, or XR remote education, cloud game, or the like. For specific effects, refer to the related description in the first aspect.

In a possible design, after the configuration information of the downlink latency is adjusted, update information may be sent to a fourth device, where the update information is used to update configuration information of an adjusted downlink latency, and a sum of the first latency and the adjusted downlink latency is less than or equal to an RTT latency requirement. In this way, an uplink latency and a downlink latency can meet the RTT latency requirement, so as to ensure an MTP latency, thereby improving user experience.

In a possible design, a time interval and a sampling period are received from a third device, and the time interval and the sampling period are sent to a first device, where the time interval is a time interval at which the terminal device sends every two uplink PDU sets, and a value of the sampling period is equal to a quantity of the at least one uplink PDU set. In this way, a fourth transmission latency can be subsequently determined based on the time interval and the sampling period, so as to determine the first latency.

In a possible design, response information is sent, where the response information includes configuration information of an adjusted downlink latency. In this way, data is transmitted based on the adjusted downlink latency.

According to a third aspect, this application provides a communication method. The method may be applied to an access network device or a processor, a chip, or a functional module in the access network device. The method may include: receiving, from a terminal device, an uplink PDU data packet included in at least one uplink PDU set, generating a converted uplink PDU data packet included in the at least one uplink PDU set, and sending, to a first device, the converted uplink PDU data packet included in the at least one uplink PDU set. A service data adaptation protocol SDAP field of the uplink PDU data packet included in the at least one uplink PDU set carries a third time, and the third time is a time at which the terminal device sends a first uplink PDU data packet of a first one of the at least one uplink PDU set. The at least one uplink PDU set corresponds to a downlink frame sent to the terminal device, and the at least one uplink PDU set and the downlink frame corresponding to the at least one uplink PDU set correspond to a same service. A general packet radio service GPRS tunneling protocol GTP field of the converted uplink PDU data packet included in the at least one uplink PDU set carries the third time. In this way, the third time can be successfully forwarded to the first device, so that the first device determines a first latency of the at least one uplink PDU set, thereby implementing RTT control.

According to a fourth aspect, this application provides a communication method. The method may be applied to a third device or a processor, a chip, or a functional module in the third device. The method may include: generating, based on at least one uplink PDU set, at least one downlink PDU data packet included in a downlink frame sent to a terminal device, and sending the at least one downlink PDU data packet included in the downlink frame to a first device, where at least one of the at least one downlink PDU data packet includes an identifier of the at least one uplink PDU set; and the at least one uplink PDU set corresponds to the downlink frame, any one of the at least one uplink PDU set includes at least one uplink PDU data packet, and the at least one uplink PDU set and the downlink frame corresponding to the at least one uplink PDU set correspond to a same service. In this way, uplink and downlink data can be subsequently associated based on the identifier of the at least one uplink PDU set that is included in the at least one downlink PDU data packet, so as to obtain a first time and a second time.

According to a fifth aspect, this application provides a communication method. The method may be applied to a third device or a processor, a chip, or a functional module in the third device. The method may include: determining a time interval and a sampling period, and sending the time interval and the sampling period to a first device via a second device, where the time interval is a time interval at which a terminal device sends every two uplink PDU sets, and a value of the sampling period is equal to a quantity of at least one uplink PDU set; and the at least one uplink PDU set corresponds to a downlink frame sent to the terminal device, any one of the at least one uplink PDU set includes at least one uplink PDU data packet, and the at least one uplink PDU set and the downlink frame corresponding to the at least one uplink PDU set correspond to a same service. In this way, a fourth transmission latency can be subsequently determined based on the time interval and the sampling period, so as to determine the first latency.

According to a sixth aspect, this application provides a communication method. The method may be applied to a first device or a processor, a chip, or a functional module in the first device. The method may include: determining a plurality of first latencies and determining an average latency of the plurality of first latencies; and if the average latency is greater than a first preset threshold, sending latency adjustment request information, where any one of the plurality of first latencies is a latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; and the latency adjustment request information includes the average latency, and the latency adjustment request information is used to request to adjust configuration information of a downlink latency based on the average latency.

With the foregoing method, a round-trip time RTT latency can be controlled at a PDU set granularity, so as to ensure an MTP latency, thereby improving user experience during use of an XR service such as XR game, XR telemedicine, or XR remote education, cloud game, or the like. For specific effects, refer to the related description in the first aspect.

In a possible design, at least one downlink PDU data packet included in the downlink frame is received from a third device, where at least one of the at least one downlink PDU data packet includes an identifier of the at least one uplink PDU set; and the at least one uplink PDU set is determined based on the identifier of the at least one uplink PDU set that is included in the at least one downlink PDU data packet. In this way, uplink and downlink data can be associated based on the identifier of the at least one uplink PDU set that is included in the at least one downlink PDU data packet.

In a possible design, a method for determining any one of the plurality of first latencies may be: obtaining, from an access network device, a first transmission latency of the uplink PDU data packet included in the at least one uplink PDU set; obtaining a first time and a second time based on the identifier of the at least one uplink PDU set; and determining the first latency based on the first transmission latency, the first time, and the second time. The first transmission latency is a transmission latency of the uplink PDU data packet included in the at least one uplink PDU set between the terminal device and the access network device. The first time is a time at which the access network device receives a first uplink PDU data packet of a first one of the at least one uplink PDU set, and the second time is a time at which the first device receives a last uplink PDU data packet of a last one of the at least one uplink PDU set. In this way, the first latency can be accurately determined.

In a possible design, a method for obtaining the first time and the second time based on the identifier of the at least one uplink PDU set may be: determining an identifier of the first one of the at least one uplink PDU set and an identifier of the last one of the at least one uplink PDU set based on the identifier of the at least one uplink PDU set; obtaining the first time based on the identifier of the first one of the at least one uplink PDU set and a first information set; and obtaining the second time based on the identifier of the last one of the at least one uplink PDU set and the first information set, where the first information set includes a correspondence between an identifier of each of the at least one uplink PDU set, a time at which the access network device receives a first uplink PDU data packet of each of the at least one uplink PDU set, and a time at which the first device receives a last uplink PDU data packet of each of the at least one uplink PDU set. In this way, the first time and the second time can be accurately determined based on the locally stored first information set.

In a possible design, the identifier of each of the at least one uplink PDU set and the time at which the access network device receives the first uplink PDU data packet of each of the at least one uplink PDU set are obtained from the access network device, and the time at which the last uplink PDU data packet of each of the at least one uplink PDU set is received is recorded; and the first information set is stored. In this way, the first time and the second time can be accurately determined subsequently based on the locally stored first information set.

In a possible design, a method for determining the first latency based on the first transmission latency, the first time, and the second time may be: determining a second transmission latency based on the first time and the second time; and determining the first latency based on the first transmission latency and the second transmission latency. In this way, the first latency can be accurately determined.

According to a seventh aspect, this application provides a communication method. The method may be applied to a second device or a processor, a chip, or a functional module in the second device. The method may include: receiving latency adjustment request information, where the latency adjustment request information includes an average latency; and adjusting configuration information of a downlink latency based on the average latency. The average latency is an average latency of a plurality of first latencies, any one of the plurality of first latencies is a transmission latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service.

With the foregoing method, an RTT latency can be controlled at a PDU set granularity, so as to ensure an MTP latency, thereby improving user experience during use of an XR service such as XR game, XR telemedicine, or XR remote education, cloud game, or the like. For specific effects, refer to the related description in the seventh aspect.

In a possible design, after the configuration information of the downlink latency is adjusted, update information may be sent to a fourth device, where the update information is used to update configuration information of an adjusted downlink latency, and a sum of the average latency and the adjusted downlink latency is less than or equal to an RTT latency requirement. In this way, an uplink latency and a downlink latency can meet the RTT latency requirement, so as to ensure an MTP latency, thereby improving user experience.

In a possible design, response information is sent, where the response information includes configuration information of an adjusted downlink latency. In this way, a first device transmits data based on the adjusted downlink latency.

According to an eighth aspect, this application provides a communication method. The method may be applied to a first device or a processor, a chip, or a functional module in the first device. The method may include: determining a first latency of at least one uplink protocol data unit PDU set, and determining a second latency of a downlink frame corresponding to the at least one uplink PDU set; and if a sum of the first latency and the second latency is greater than a second preset threshold, sending latency adjustment request information. The at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; and the latency adjustment request information includes the sum of the first latency and the second latency, and the latency adjustment request information is used to request to adjust configuration information of an uplink latency and/or a downlink latency based on the sum of the first latency and the second latency.

With the foregoing method, an RTT latency can be controlled at a PDU set granularity, so as to ensure an MTP latency, thereby improving user experience during use of an XR service such as XR game, XR telemedicine, or XR remote education, cloud game, or the like. For example, during real-time data transmission of the XR service such as XR game or XR remote education, cloud game, or the like, a subsequent uplink latency and/or downlink latency may be adjusted based on a sum of the uplink latency and the downlink latency, so that the uplink and downlink latencies meet the latency requirement, thereby ensuring smoothness of game or teaching videos, and improving user experience. For another example, in XR telemedicine, during quality inspection, maintenance, or test of an XR device, a subsequent uplink latency and/or downlink latency may be adjusted based on a sum of the uplink latency and the downlink latency, so that the uplink and downlink latencies meet the latency requirement, and the XR device ensures real-time transmission of medical images when being used for XR telemedicine, thereby improving user experience.

In a possible design, at least one downlink PDU data packet included in the downlink frame is received from a third device, where at least one of the at least one downlink PDU data packet includes an identifier of the at least one uplink PDU set; and the at least one uplink PDU set is determined based on the identifier of the at least one uplink PDU set that is included in the at least one downlink PDU data packet. In this way, uplink and downlink data can be associated based on the identifier of the at least one uplink PDU set that is included in the at least one downlink PDU data packet.

In a possible design, a method for determining the first latency of the at least one uplink PDU set may be: obtaining, from an access network device, a first transmission latency of the uplink PDU data packet included in the at least one uplink PDU set; obtaining a first time and a second time based on the identifier of the at least one uplink PDU set; and determining the first latency based on the first transmission latency, the first time, and the second time. The first transmission latency is a transmission latency of the uplink PDU data packet included in the at least one uplink PDU set between the terminal device and the access network device. The first time is a time at which the access network device receives a first uplink PDU data packet of a first one of the at least one uplink PDU set, and the second time is a time at which the first device receives a last uplink PDU data packet of a last one of the at least one uplink PDU set. In this way, the first latency can be accurately determined.

In a possible design, a method for obtaining the first time and the second time based on the identifier of the at least one uplink PDU set may be: determining an identifier of the first one of the at least one uplink PDU set and an identifier of the last one of the at least one uplink PDU set based on the identifier of the at least one uplink PDU set; obtaining the first time based on the identifier of the first one of the at least one uplink PDU set and a first information set; and obtaining the second time based on the identifier of the last one of the at least one uplink PDU set and the first information set, where the first information set includes a correspondence between an identifier of each of the at least one uplink PDU set, a time at which the access network device receives a first uplink PDU data packet of each of the at least one uplink PDU set, and a time at which the first device receives a last uplink PDU data packet of each of the at least one uplink PDU set. In this way, the first time and the second time can be accurately determined based on the locally stored first information set.

In a possible design, the identifier of each of the at least one uplink PDU set and the time at which the access network device receives the first uplink PDU data packet of each of the at least one uplink PDU set are obtained from the access network device, and the time at which the last uplink PDU data packet of each of the at least one uplink PDU set is received is recorded; and the first information set is stored. In this way, the first time and the second time can be accurately determined subsequently based on the locally stored first information set.

In a possible design, a method for determining the first latency based on the first transmission latency, the first time, and the second time may be: determining a second transmission latency based on the first time and the second time; and determining the first latency based on the first transmission latency and the second transmission latency. In this way, the first latency can be accurately determined.

In a possible design, a fourth time and a fifth time are recorded, where the fourth time is a time at which the first device receives a first one of the at least one downlink PDU data packet included in the downlink frame, and the fifth time is a time at which the first device completes sending of a last one of the at least one downlink PDU data packet included in the downlink frame. In this way, the second latency can be determined based on the fourth time and the fifth time.

In a possible design, the second latency of the downlink frame corresponding to the at least one uplink PDU set may be determined by using the following method: obtaining a fifth transmission latency of the downlink PDU data packet, and determining the second latency based on the fourth time, the fifth time, and the fifth transmission latency. The fifth transmission latency is a transmission latency of the downlink PDU data packet included in the downlink frame between the terminal device and the first device. In this way, the second latency can be accurately determined.

In a possible design, a method for determining the second latency based on the fourth time, the fifth time, and the fifth transmission latency may be: determining a sixth transmission latency based on the fourth time and the fifth time; and determining the second latency based on the fifth transmission latency and the sixth transmission latency. In this way, the second latency can be accurately determined.

According to a ninth aspect, this application provides a communication method. The method may be applied to a second device or a processor, a chip, or a functional module in the second device. The method may include: receiving latency adjustment request information, where the latency adjustment request information includes a sum of a first latency and a second latency; and adjusting configuration information of an uplink latency and/or threshold configuration information of a downlink latency based on the sum of the first latency and the second latency. The first latency is a transmission latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service. The second latency is a transmission latency of the downlink frame corresponding to the at least one uplink PDU set.

With the foregoing method, an RTT latency can be controlled at a PDU set granularity, so as to ensure an MTP latency, thereby improving user experience during use of an XR service such as XR game, XR telemedicine, or XR remote education, cloud game, or the like. For details, refer to the related description of effects in the eighth aspect.

In a possible design, after adjustment to the configuration information of the uplink latency and/or the configuration information of the downlink latency, update information may be sent to the fourth device, where the update information is used to update configuration information of an adjusted uplink latency and/or configuration information of an adjusted downlink latency. The sum of the first latency and the adjusted downlink latency is less than or equal to the RTT latency requirement, or the sum of the second latency and the adjusted uplink latency is less than or equal to the RTT latency requirement, or the sum of the adjusted uplink latency and the adjusted downlink uplink latency is less than or equal to the RTT latency requirement. In this way, an uplink latency and a downlink latency can meet the RTT latency requirement, so as to ensure an MTP latency, thereby improving user experience.

In a possible design, response information is sent, where the response information includes the configuration information of the adjusted uplink latency and/or the configuration information of the adjusted downlink latency. In this way, data is transmitted based on the adjusted uplink latency and/or the adjusted downlink latency.

According to a tenth aspect, this application further provides a communication apparatus. The communication apparatus may be a first device. The communication apparatus has a function of implementing the method in the first aspect or the possible design examples of the first aspect, the sixth aspect or the possible design examples of the sixth aspect, or the eighth aspect or the possible design examples of the eighth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. The units may perform corresponding functions in the first aspect or the possible design examples of the first aspect, the sixth aspect or the possible design examples of the sixth aspect, or the eighth aspect or the possible design examples of the eighth aspect. For details, refer to the detailed description in the method examples. Details are not described herein again.

In a possible design, a structure of the communication apparatus includes a transceiver and a processor, and optionally further includes a memory. The transceiver is configured to receive and send data, messages, information, or the like, and is configured to communicate and interact with other devices in a communication system. The processor is configured to support the communication apparatus in performing corresponding functions in the first aspect or the possible design examples of the first aspect, the sixth aspect or the possible design examples of the sixth aspect, or the eighth aspect or the possible design examples of the eighth aspect. The memory is coupled to the processor, and the memory stores program instructions and data that are necessary for the communication apparatus.

According to an eleventh aspect, this application further provides a communication apparatus. The communication apparatus may be a second device. The communication apparatus has a function of implementing the method in the second aspect or the possible design examples of the second aspect, the seventh aspect or the possible design examples of the seventh aspect, or the ninth aspect or the possible design examples of the ninth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. The units may perform corresponding functions in the second aspect or the possible design examples of the second aspect, the seventh aspect or the possible design examples of the seventh aspect, or the ninth aspect or the possible design examples of the ninth aspect. For details, refer to the detailed description in the method examples. Details are not described herein again.

In a possible design, a structure of the communication apparatus includes a transceiver and a processor, and optionally further includes a memory. The transceiver is configured to receive and send data, messages, information, or the like, and is configured to communicate and interact with other devices in a communication system. The processor is configured to support the communication apparatus in performing corresponding functions in the second aspect or the possible design examples of the second aspect, the seventh aspect or the possible design examples of the seventh aspect, or the ninth aspect or the possible design examples of the ninth aspect. The memory is coupled to the processor, and the memory stores program instructions and data that are necessary for the communication apparatus.

According to a twelfth aspect, this application further provides a communication apparatus. The communication apparatus may be an access network device. The communication apparatus has a function of implementing the method in the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions in the third aspect or the possible design examples of the third aspect. For details, refer to the detailed description in the method examples. Details are not described herein again.

In a possible design, a structure of the communication apparatus includes a transceiver and a processor, and optionally further includes a memory. The transceiver is configured to receive and send data, messages, information, or the like, and is configured to communicate and interact with other devices in a communication system. The processor is configured to support the communication apparatus in performing corresponding functions in the third aspect or the possible design examples of the third aspect. The memory is coupled to the processor, and the memory stores program instructions and data that are necessary for the communication apparatus.

According to a thirteenth aspect, this application further provides a communication apparatus. The communication apparatus may be a third device. The communication apparatus has a function of implementing the method in the fourth aspect or the possible design examples of the fourth aspect, or the method in the fifth aspect or the possible design examples of the fifth aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions in the fourth aspect or the possible design examples of the fourth aspect, or the fifth aspect or the possible design examples of the fifth aspect. For details, refer to the detailed description in the method examples. Details are not described herein again.

In a possible design, a structure of the communication apparatus includes a transceiver and a processor, and optionally further includes a memory. The transceiver is configured to receive and send data, messages, information, or the like, and is configured to communicate and interact with other devices in a communication system. The processor is configured to support the communication apparatus in performing corresponding functions in the fourth aspect or the possible design examples of the fourth aspect, or the fifth aspect or the possible design examples of the fifth aspect. The memory is coupled to the processor, and the memory stores program instructions and data that are necessary for the communication apparatus.

According to a fourteenth aspect, an embodiment of this application provides a communication system. The communication system may include the foregoing access network device, first device, second device, third device, and the like.

According to a fifteenth aspect, an embodiment of this application provides a computer-readable storage medium. The computer-readable storage medium stores program instructions, and when the program instructions are run on a computer, the computer is enabled to perform the method in any one of the first aspect and the possible designs of the first aspect, the method in any one of the second aspect and the possible designs of the second aspect, the method in any one of the third aspect and the possible designs of the third aspect, the method in any one of the fourth aspect and the possible designs of the fourth aspect, the method in any one of the fifth aspect and the possible designs of the fifth aspect, the method in any one of the sixth aspect and the possible designs of the sixth aspect, the method in any one of the seventh aspect and the possible designs of the seventh aspect, the method in any one of the eighth aspect and the possible designs of the eighth aspect, or the method in any one of the ninth aspect and the possible designs of the ninth aspect in embodiments of this application. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in the form of instructions or a data structure and that can be accessed by the computer.

According to a sixteenth aspect, an embodiment of this application provides a computer program product, including instructions. When the instructions are run on a computer, the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, the method in any one of the eighth aspect or the possible designs of the eighth aspect, or the method in any one of the ninth aspect or the possible designs of the ninth aspect is performed.

According to a seventeenth aspect, this application further provides a chip, including a processor. The processor is coupled to a memory, and is configured to read and execute program instructions stored in the memory, so that the chip implements the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, the method in any one of the eighth aspect or the possible designs of the eighth aspect, or the method in any one of the ninth aspect or the possible designs of the ninth aspect.

For technical effects that can be achieved by each of the tenth aspect to the seventeenth aspect and the possible solutions of each aspect, refer to the description of technical effects that can be achieved by the first aspect or the possible solutions of the first aspect, the second aspect or the possible solutions of the second aspect, the third aspect and the possible solutions of the third aspect, the fourth aspect and the possible solutions of the fourth aspect, the fifth aspect or the possible solutions of the fifth aspect, the sixth aspect and the possible solutions of the sixth aspect, the seventh aspect and the possible solutions of the seventh aspect, the eighth aspect or the possible solutions of the eighth aspect, or the ninth aspect and the possible solutions of the ninth aspect. Details are not described herein again.

### BRIEF DESCRIPTION OF DRAWINGS

FIG. 1 is a diagram of an architecture of a communication system according to this application;
FIG. 2 is a diagram of a typical service procedure of an XR service according to this application;
FIG. 3 is a flowchart of a communication method according to this application;
FIG. 4 is a diagram of transmission of an uplink PDU set according to this application;
FIG. 5 is a diagram of a first latency according to this application;
FIG. 6 is a diagram of another first latency according to this application;
FIG. 7 is a flowchart of an example of a communication method according to this application;
FIG. 8 is a flowchart of an example of another communication method according to this application;
FIG. 9 is a flowchart of an example of another communication method according to this application;
FIG. 10 is a flowchart of another communication method according to this application;
FIG. 11 is a flowchart of an example of another communication method according to this application;
FIG. 12 is a flowchart of another communication method according to this application;
FIG. 13 is a flowchart of an example of another communication method according to this application;
FIG. 14 is a diagram of a structure of a communication apparatus according to this application; and
FIG. 15 is a diagram of a structure of a communication apparatus according to this application.

### DESCRIPTION OF EMBODIMENTS

The following further describes in detail this application with reference to accompanying drawings.

Embodiments of this application provide a communication method and apparatus, to ensure an MTP latency in a service such as an XR service. The method and the apparatus in this application are based on the same technical concept. Because problem-solving principles of the method and the apparatus are similar, mutual reference may be made to implementations of the apparatus and the method, and repeated parts are not described.

In the description of this application, words such as "first" and "second" are merely used for distinguishing between descriptions, and cannot be understood as an indication or implication of relative importance, or understood as an indication of implication of an order.

In the description of this application, "at least one (type)" means one or more (types), and "a plurality of (types)" means two or more (types). The term "at least one of the following items" or an expression similar to the term indicates any combination of the items, including any combination of singular items or plural items. For example, at least one of a, b, or c may indicate a, b, c, a and b, a and c, b and c, or a, b, and c, where a, b, and c may be singular or plural.

In the description of this application, "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

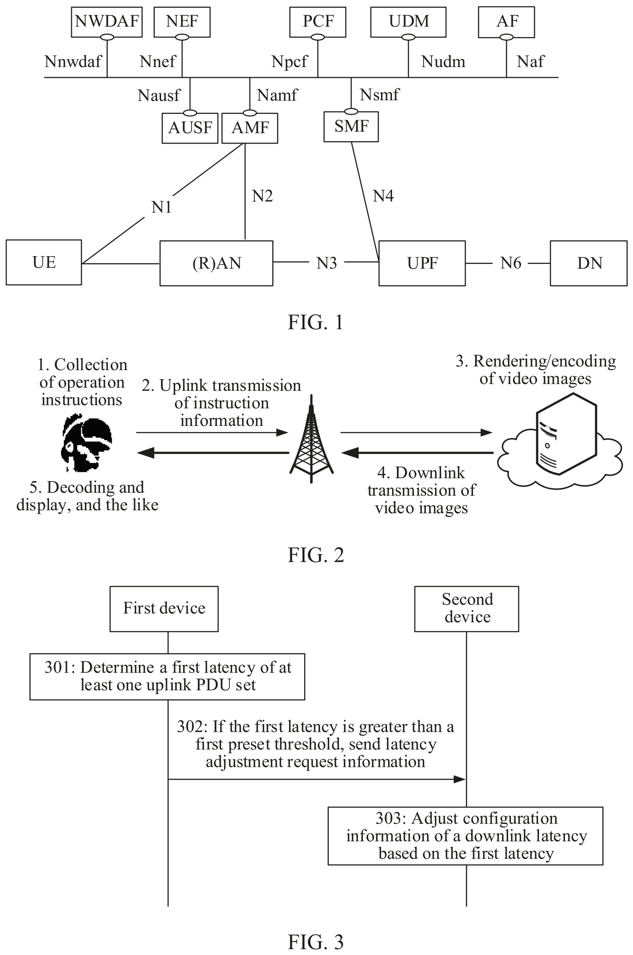

FIG. 1 shows an architecture of a communication system to which a communication method according to embodiments of this application is applicable. The architecture of the communication system may include a radio access network, a terminal device, and a core network. For example, in the architecture of the communication system, the radio access network may include an access network device ((radio) access network, (R)AN). The core network may include a network data analytics function (network data analytics function, NWDAF) network element, a network exposure function (network exposure function, NEF) network element, a policy control function (policy control function, PCF) network element, a unified data management function network element (unified data management, UDM), an application function (application function, AF) network element, an authentication server function (authentication server function, AUSF) network element, an access and mobility management function (access and mobility management function, AMF) network element, a session management function network element (session management function, SMF) network element, and a user plane function (user plane function, UPF) network element. The AMF network element may be connected to the access network device through an N2 interface, the access network device may be connected to the UPF through an N3 interface, the SMF may be connected to the UPF through an N4 interface, and the AMF network element may be connected to the terminal device through an N1 interface. An interface name is merely an example for description and is not specifically limited in embodiments of this application. It should be understood that embodiments of this application are not limited to the communication system shown in FIG. 1. Names of the network elements shown in FIG. 1 are merely used as examples for description herein, and are not used as limitations on the network elements included in the communication system architecture to which the method in this application is applicable. Functions of the network elements or devices in the communication system are described in detail below.

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a handheld device and vehicle-mounted device having a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a mixed reality (mixed reality, MR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown as UE, which is merely used as an example. No limitation is imposed on the terminal device.

The (R)AN device is a device that provides access for the terminal device, and includes a radio access network (radio access network, RAN) device and an access network (access network, AN) device. The RAN device is mainly a 3GPP network wireless network device, and the AN device may be an access network device defined in non-3GPP. The RAN device is mainly responsible for functions such as radio resource management, quality of service (quality of service, QoS) management, and data compression and encryption on an air interface side. The access network device may include base stations in various forms, for example, a macro base station, a micro base station (also referred to as a small cell), a relay station, and an access point. In systems using different radio access technologies, names of devices having a base station function may be different. For example, in a 5G system, the device is referred to as a RAN device or a gNB (5G NodeB) device.

The access and mobility management function network element may be configured for access control and mobility management of a terminal device. During actual application, the access and mobility management function network element includes a mobility management function of a mobility management entity (mobility management entity, MME) in a long term evolution (long term evolution, LTE) network architecture, and includes an access management function. The access and mobility management function network element may be specifically responsible for registration of the terminal device, mobility management, a tracking area update procedure, reachability detection, selection of a session management function network element, mobility state transition management, and the like. For example, in 5G, the access and mobility management function network element may be an AMF network element, for example, as shown in FIG. 1. In future communication, for example, in 6G, the access and mobility management function network element may still be the AMF network element or have another name. This is not limited in this application. When the access and mobility management function network element is the AMF network element, the AMF may provide an Namf service.

The session management function network element may be configured to be responsible for session management (including session establishment, modification, and release) of the terminal device, selection and reselection of a user plane function network element, internet protocol (internet protocol, IP) address allocation of the terminal device, quality of service (quality of service, QoS) control, and the like. For example, in 5G, the session management function network element may be an SMF network element, for example, as shown in FIG. 1. In future communication, for example, in 6G, the session management function network element may still be the SMF network element or have another name. This is not limited in this application. When the session management function network element is the SMF network element, the SMF may provide an Nsmf service.

The user plane function network element is responsible for forwarding and receiving of user data in the terminal device. The user plane function network element may receive user data from a data network, and transmit the user data to the terminal device through the access network device. The UPF network element may further receive the user data from the terminal device through the access network device, and forward the user data to the data network. Transmission resources and scheduling functions that are used by the UPF network element to provide services for the terminal device are managed and controlled by the SMF network element. For example, in 5G, the user plane function network element may be a UPF network element, for example, as shown in FIG. 1. In future communication, for example, in 6G, the user plane function network element may still be the UPF network element or have another name. This is not limited in this application.

The policy control function network element mainly supports a unified policy framework to govern network behavior and provides policy rules to a control plane network function, and is responsible for accessing user subscription information for policy decisions. For example, rules such as service data flow-based and application-based detection, gating, QoS, and flow-based charging control may be provided. For example, in 5G, the policy control function network element may be a PCF network element, for example, as shown in FIG. 1. In future communication, for example, in 6G, the policy control function network element may still be the PCF network element or have another name. This is not limited in this application. When the policy control function network element is the PCF network element, the PCF network element may provide an Npcf service.

The network exposure function network element mainly supports secure interaction between the 3GPP network and a third-party application. For example, in 5G, the network exposure function network element may be an NEF network element, for example, as shown in FIG. 1. In future communication, for example, in 6G, the network exposure function network element may still be the NEF network element or have another name. This is not limited in this application. When the network exposure function network element is the NEF, the NEF may provide an Nnef service for another network function network element.

The application function network element mainly supports interacting with a 3GPP core network to provide services, for example, influence on traffic routing decision, a policy control function, or some third-party services provided for a network side. For example, in 5G, the application function network element may be an AF network element, for example, as shown in FIG. 1. In future communication, for example, in 6G, the application function network element may still be the AF network element or have another name. This is not limited in this application. When the application function network element is the AF network element, the AF network element may provide an Naf service.

The unified data management function network element is configured for generation of authentication credentials, user identification handling (for example, storage and management of permanent user identifiers), access authorization control, subscription data management, and the like. For example, in 5G, the unified data management function network element may be a UDM network element, for example, as shown in FIG. 1. In future communication, for example, in 6G, the unified data management function network element may still be the UDM network element or have another name. This is not limited in this application. When the unified data management function network element is the UDM network element, the UDM network element may provide an Nudm service.

A network data analytics function network element may provide network data collection and analytics functions based on technologies such as big data and artificial intelligence. For example, in 5G, the network data analytics function network element may be an NWDAF network element, for example, as shown in FIG. 1. In future communication, for example, in 6G, the network data analytics function network element may still be an NWDAF network element or have another name. This is not limited in this application. When the network data analytics function network element is the NWDAF network element, the NWDAF network element may provide an Nnwdaf service.

The main function of the authentication server function network element is to provide an authentication service. For example, in 5G, the authentication server function network element may be an AUSF network element, for example, as shown in FIG. 1. In future communication, for example, in 6G, the authentication server function network element may still be an AUSF network element or have another name. This is not limited in this application. When the authentication server function network element is the AUSF network element, the AUSF network element may provide an Nausf service.

The data network (data network, DN) is a service network that provides a data transmission service for a user, for example, an IP multimedia service (IP multimedia service, IMS) or the internet (internet).

The UE accesses the DN by using a protocol data unit (protocol data unit, PDU) session established between the UE and the DN.

Each network element in the core network may also be referred to as a functional entity or device, and may be a network element implemented on dedicated hardware, a software instance running on dedicated hardware, or an instance of a virtualized function on an appropriate platform. For example, a virtualization platform may be a cloud platform.

It should be noted that the architecture of the communication system shown in FIG. 1 is not limited to including only the network elements shown in the figure, and may further include another device not shown in the figure. Examples are not listed herein in this application one by one.

It should be noted that a distribution form of the network elements is not limited in embodiments of this application. The distribution form shown in FIG. 1 is merely an example, and is not limited in this application.

For ease of description, in this application, the network elements shown in FIG. 1 are used as examples for description below, and an XX network element is directly referred to as XX for short. For example, the UPF network element is referred to as an UPF for short. It should be understood that the names of all network elements in this application are merely used as examples, and may also be referred to as other names in future communication, or the network element in this application may be replaced by another entity or device that has a same function in future communication. This is not limited in this application. Unified descriptions are provided herein, and details are not described below again.

Currently, the development of 5G drives the exponential growth of media services. Video services have become the mainstream media form, and emerging multimedia services such as 4K/8K ultra-HD videos and XR have emerged.

XR enables the coexistence and interaction between physical objects in the real world and digital objects in the virtual world through auxiliary devices, ultimately achieving a seamless fusion of the virtual and the real. Currently, it mainly includes virtual reality (virtual reality, VR), augmented reality (augmented reality, AR), and mixed reality (mixed reality, MR). A typical service procedure of an XR service may be as shown in FIG. 2, mainly including collection of operation instructions, uplink transmission of instruction information, rendering/encoding of video images, downlink transmission of video images, decoding and displaying on a terminal device, and other processing processes. For example, a user's XR device (such as a wearable VR headset) captures motion information of the user, such as head motion, hand motion, or crouching/standing up, and sends the motion information to a cloud server via a communication network (for example, a 5G network). The cloud server inputs the motion information of the user into an XR application as input information, uses a graphics processing unit (graphics processing unit, GPU) in the server to render and generate images, and then sends the video images to the XR device via the communication network for the user to view.

Latencies have a direct impact on the image refresh quality and the user interaction of the XR service, with a motion-to-photon (motion-to-photon, MTP) latency being a deterministic indicator that needs to be met. MTP latency is a latency from the detection of head/hand motion by an inertial measurement unit (inertial measurement unit, IMU) or a vision sensor to the rendering of corresponding new images by an image engine and the display of the images on the screen. If the MTP latency cannot meet the requirements, users may experience dizziness, impacting the user experience.

According to the definition of the MTP latency, a round-trip time (round-trip time, RTT) latency between uplink instruction transmission and downlink video image transmission on the network side corresponds to the time consumed by the entire process from the sending of an uplink motion instruction to the rendering of the corresponding images by the server and the sending of the images to the terminal device. A downlink latency of the RTT latency corresponds to a transmission latency of a downlink video frame. To ensure that the MTP latency meets user experience requirements, the MTP latency may be controlled to be within an effective range by controlling the RTT latency, thereby improving experience of XR users.

Based on this, an embodiment of this application provides a communication method, to ensure an MTP latency by controlling an RTT latency at a protocol data unit (protocol data unit, PDU) set (set) granularity.

It should be noted that in the following embodiments, an XX network element or device being an execution entity may be understood as that an operation is performed by the XX network element or device, or that the operation is performed by a processor, chip, functional module, or the like in the XX network element or device. For example, an operation performed by a first device may be understood as being performed by the first device, or as being performed by a processor, chip, or functional module in the first device.

Based on the foregoing description, an embodiment of this application provides a communication method. Refer to FIG. 3. A specific procedure of the method may include the following steps.

Step 301: A first device determines a first latency of at least one uplink PDU set, where the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service.

The first device may be a UPF.

Optionally, the service may be an XR service such as XR game, XR telemedicine, or XR remote education, cloud game service, or the like, or may be any service for feeding back downlink data based on uplink data. This is not limited in this application.

For ease of description, in the following description of embodiments of this application, the downlink frame sent to the terminal device is a first downlink frame, for example. That is, the first downlink frame is used as example of the downlink frame corresponding to the at least one uplink PDU set for description. It should be understood that the first downlink frame is merely an example for description, and is not intended to limit this application.

In an optional implementation a1, the first device may determine the first latency of the at least one uplink PDU set by using the following method: The first device obtains, from an access network device, a first transmission latency of the uplink PDU data packet included in the at least one uplink PDU set; and obtains a first time from the access network device and records a second time. The first device determines the first latency based on the first transmission latency, the first time, and the second time. The first transmission latency is a transmission latency of the uplink PDU data packet (for example, one uplink PDU data packet) included in the at least one uplink PDU set between the terminal device and the access network device. The first time is a time at which the access network device receives a first uplink PDU data packet of a first one of the at least one uplink PDU set, and the second time is a time at which the first device receives a last uplink PDU data packet of a last one of the at least one uplink PDU set.

Optionally, the access network device may determine, based on a QoS monitoring (monitoring) mechanism, latencies of transmitting all uplink PDU data packets in the at least one uplink PDU set from the terminal device to the access network device, to obtain the first transmission latency, and then the access network device sends the first transmission latency to the first device. For example, the access network device may determine an average latency of transmitting all the uplink PDU data packets in the at least one uplink PDU set from the terminal device to the access network device, and uses the average latency as the first transmission latency.

In a possible manner, the first device may obtain the first time from the access network device by using the following two methods.

Method b1: The first device receives, from the access network device, the uplink PDU data packet included in the at least one uplink PDU set, where a general packet radio service (general packet radio service, GPRS) tunneling protocol GTP field of the uplink PDU data packet included in the at least one uplink PDU set carries the first time; and the first device obtains the first time carried in the GTP field of the uplink PDU data packet included in the at least one uplink PDU set.

Specifically, the first device parses the GTP field of the uplink PDU data packet included in the at least one uplink PDU set, to obtain the first time.

Optionally, the first time may be carried in a GTP field of a first PDU data packet, or GTP fields of first several PDU data packets, or GTP fields of last several PDU data packets, or a GTP field of a last PDU data packet, or a GTP field of any PDU data packet, or a GTP field of each PDU data packet in uplink PDU data packets included in the at least one uplink PDU set. This is not limited in this application.

For example, the at least one uplink PDU set is transmitted in sequential order. In other words, the first device may determine the order of the at least one uplink PDU set. The uplink PDU data packet included in the at least one PDU set includes an identifier of a corresponding PDU set, and the at least one PDU set may be transmitted in ascending order of the magnitude of the identifier of the PDU set.

For example, the first device may receive at least one uplink PDU set in a preset time period. Alternatively, the first device may determine, based on a preset quantity of uplink PDU sets corresponding to one downlink frame, uplink PDU sets to be received; that is, at least one uplink PDU set is received. Alternatively, the first device may receive the at least one uplink PDU set based on a preset data volume. Alternatively, the application network element notifies in advance the first device of at least one uplink PDU set that needs to be received.

Method b2: The first device receives first information from the access network device, where the first information includes the first time.

The access network device may record the time at which the first uplink PDU data packet of the first one of the at least one uplink PDU set is received, that is, record the first time, and send the first time to the first device by using the method b1 or the method b2.

Specifically, when the first device determines the first latency based on the first transmission latency, the first time, and the second time, the first device determines a second transmission latency based on the first time and the second time, and then the first device determines the first latency based on the first transmission latency and the second transmission latency. The second transmission latency is a time difference between the second time and the first time; that is, the second transmission latency is obtained by subtracting the first time from the second time. The first latency is a sum of the first transmission latency and the second transmission latency.

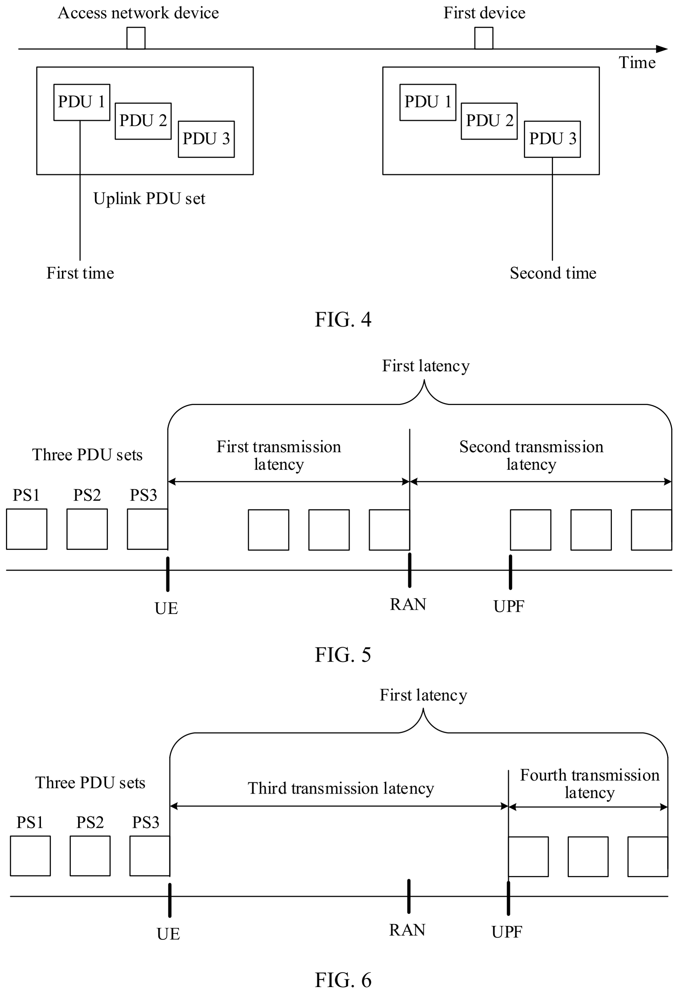

For example, the at least one uplink set includes one uplink PDU set, and it is assumed that the one uplink PDU set includes three uplink PDU data packets, which are respectively denoted as a PDU 1, a PDU 2, and a PDU 3. As shown in FIG. 4, if the access network device receives a first uplink PDU data packet PDU 1 at a first time, and the first device receives a last uplink PDU data packet PDU 3 at a second time, the second transmission latency is obtained by subtracting the first time from the second time.

In an optional implementation a2, the first device may determine the first latency of the at least one uplink PDU set by using the following method: The first device obtains a third time from an access network device and records a second time; and then the first device determines the first latency based on the third time and the second time. The third time is a time at which the terminal device sends a first uplink PDU data packet of a first one of the at least one uplink PDU set. For the second time, refer to the foregoing description.

In a possible manner, the first device may obtain the third time from the access network device by using the following two methods:

Method c1: The first device receives, from the access network device, the uplink PDU data packet included in the at least one uplink PDU set, where a GTP field of the uplink PDU data packet included in the at least one uplink PDU set carries the third time; and the first device obtains the third time carried in the GTP field of the uplink PDU data packet included in the at least one uplink PDU set.

Optionally, the third time may be carried in a GTP field of a first PDU data packet, or GTP fields of first several PDU data packets, or GTP fields of last several PDU data packets, or a GTP field of a last PDU data packet, or a GTP field of any PDU data packet, or a GTP field of each PDU data packet in uplink PDU data packets included in the at least one uplink PDU set. This is not limited in this application.

Specifically, the terminal device may record the time at which the first uplink PDU data packet of the first one of the at least one uplink PDU set is sent, that is, record the third time; include the third time in a service data adaptation protocol (service data adaption protocol, SDAP) field of the uplink PDU data packet included in the at least one uplink PDU set, and send the uplink PDU data packet included in the at least one uplink PDU set to the access network device. Then, the access network device generates a converted uplink PDU data packet included in the at least one uplink PDU set, where a GTP field of the converted uplink PDU data packet included in the at least one uplink PDU set carries the third time. Finally, the access network device sends, to the first device, the converted uplink PDU data packet included in the at least one uplink PDU set. The first device parses a GTP field of any one of the uplink PDU data packets included in the at least one uplink PDU set, to obtain the third time.

Method c2: The first device receives, from the access network device, second information originating from the terminal device, where the second information includes the third time.

Specifically, the terminal device may record the time at which the first uplink PDU data packet of the first one of the at least one uplink PDU set is sent, that is, record the third time; and send the second information including the third time to the access network device. The access network device forwards the second information to the first device.

Optionally, the first device may obtain, from the access network device, an identifier of each of the at least one uplink PDU set and a time at which the access network device receives a first uplink PDU data packet in each of the at least one uplink PDU set, and record a time at which the first device receives a last uplink PDU data packet in each of the at least one uplink PDU set. Then, the first device stores, as a first information set, a correspondence between the identifier of each of the at least one uplink PDU set, the time at which the access network device receives the first uplink PDU data packet in each of the at least one uplink PDU set, and the time at which the first device receives the last uplink PDU data packet in each of the at least one uplink PDU set.

Specifically, the access network device may record the time at which the first uplink PDU data packet in each of the at least one uplink PDU set is received. For example, the time is denoted as t_i0, where i is the identifier of the uplink PDU set. Then, the access network device includes the recorded t_i0 in the GTP field of the uplink PDU data packet included in the at least one uplink PDU set, and sends, to the first device, the uplink PDU data packet included in the at least one uplink PDU set and carrying t_i0. The first device parses the GTP field of the uplink PDU data packet included in the at least one uplink PDU set, to obtain t_i0; that is, the identifier of the uplink PDU set in the at least one uplink PDU set and the time at which the first uplink PDU data packet in each of the at least one uplink PDU set is received are obtained.

The first device records the time at which the first device receives the last uplink PDU data packet in each of the at least one uplink PDU set. For example, the time is denoted as t_i1. Based on this, the first information set stored by the first device, for example, may be represented as [i, t_i0, t_i1], to record an identifier i of the uplink PDU set, a time t_i0 corresponding to the first uplink PDU data packet that arrives at the access network device in the uplink PDU set identified as i, and a time t_i1 corresponding to the last uplink PDU data packet that arrives at the first device in the uplink PDU set identified as i.

For example, the identifier of the uplink PDU set may be a sequence number or the like of the uplink PDU set.

Further, the first device sends uplink PDU data packets included in the at least one uplink PDU set to a third device, where at least one of the uplink PDU data packets included in the at least one uplink PDU set includes the identifier of the at least one uplink PDU set.

Optionally, the third device generates, based on the uplink PDU data packet included in the at least one uplink PDU set, at least one downlink PDU data packet included in the first downlink frame, and sends the at least one downlink PDU data packet included in the first downlink frame to the first device, where at least one of the at least one downlink PDU data packet includes the identifier of the at least one uplink PDU set. This allows the first device to subsequently determine the at least one uplink PDU set based on the identifier of the at least one uplink PDU set that is included in the at least one downlink PDU data packet.

Based on the foregoing description, in an optional implementation a3, the first device may determine the first latency of the at least one uplink PDU set by using the following method: The first device obtains the first transmission latency of the uplink PDU data packet included in the at least one uplink PDU set from the access network device. The first device obtains the first time and the second time based on the identifier of the at least one uplink PDU set. The first device determines the first latency based on the first transmission latency, the first time, and the second time.

In a possible manner, a method for obtaining, by the first device, the first time and the second time based on the identifier of the at least one uplink PDU set may be as follows: The first device determines an identifier of the first one of the at least one uplink PDU set and an identifier of the last one of the at least one uplink PDU set based on the identifier of the at least one uplink PDU set. Then, the first device obtains the first time based on the identifier of the first one of the at least one uplink PDU set and the first information set; and the first device obtains the second time based on the identifier of the last one of the at least one uplink PDU set and the first information set.

Optionally, the identifier of the at least one uplink PDU set includes the identifier of the first one of the at least one uplink PDU set and the identifier of the last one of the at least one uplink PDU set.

It should be understood that when the at least one uplink PDU set is one uplink PDU set, the identifier of the first uplink PDU set and the identifier of the last one of the at least one uplink PDU set are the identifier of the same uplink PDU set.

For the method for determining the first latency by the first device based on the first transmission latency, the first time, and the second time, refer to the foregoing related description. Details are not described herein again.

For example, it is assumed that the at least one uplink PDU set corresponding to the first downlink frame includes three uplink PDU sets, which are denoted as PS1, PS2, and PS3. As shown in FIG. 5, the first latency may include a first transmission latency and a second transmission latency.

In the implementation a1 to the implementation a3, the third device may send an RTT requirement to a second device, and the second device performs latency decomposition based on the RTT requirement to determine corresponding uplink and downlink QoS policies, and configures configuration information including the uplink and downlink QoS policies for an SMF, the first device, the access network device, and the terminal device. The RTT requirement refers to a maximum network transmission latency that can be tolerated by a service (a network transmission latency refers to a sum of uplink and downlink transmission latencies of a data packet between the terminal device and the first device). In this way, the first device may determine respective thresholds of the uplink latency and the downlink latency based on the configuration information of the uplink and downlink QoS policies.

In an optional implementation a4, the first device may determine the first latency of the at least one uplink PDU set corresponding to the first downlink frame by using the following method: The first device determines a third transmission latency of the uplink PDU data packet included in the at least one uplink PDU set, and determines a fourth transmission latency based on a time interval and a sampling period. The first device determines the first latency based on the third transmission latency and the fourth transmission latency. The third transmission latency is a transmission latency of any uplink PDU data packet included in the at least one uplink PDU set between the terminal device and the first device. The time interval is a time interval at which the terminal device sends every two uplink PDU sets, and a value of the sampling period is equal to a quantity of PDU sets of the at least one uplink PDU set.

Optionally, a method for determining the fourth transmission latency by the first device based on the time interval and the sampling period may be as follows: The first device multiplies the time interval by the sampling period to obtain the fourth transmission latency.

For example, the sampling period is a sampling period of the third device. The third device processes received uplink signals (for example, uplink PDU data packets) at a fixed periodicity to obtain one downlink frame. A periodicity in which one downlink frame is obtained through processing may include N sampling periods. In one sampling period, the third device may collect one uplink PDU set; that is, the third device may collect N PDU sets in N sampling periods.

For example, assuming that N is equal to 3, the third device processes signals in every three sampling periods to obtain the first downlink frame. As shown in FIG. 6, the first latency may include a third transmission latency and a fourth transmission latency.

The first device obtains the time interval and the sampling period that originate from the third device. Specifically, the third device determines the time interval and the sampling period, and sends the time interval and the sampling period to the first device via the second device.

For example, the time interval may be reported by the terminal device to the third device. Alternatively, the time interval is determined by the third device, and the third device configures the time interval for the terminal device.

Optionally, the first device may further obtain the RTT requirement from the third device. Similarly, for the method for obtaining the RTT requirement by the first device, refer to the foregoing related description. Details are not described herein again.

Optionally, in the implementation a4, the second device may determine the QoS policies based on the RTT requirement, the time interval, and the sampling period. Accordingly, the QoS policies may include the time interval and the sampling period, so that the first device associates uplink and downlink PDU sets.

The second device may be a PCF, and the third device may be an AF.

Step 302: If the first latency is greater than a first preset threshold, the first device sends latency adjustment request information to the second device, where the latency adjustment request information includes the first latency, and the latency adjustment request information is used to request to adjust configuration information of a downlink latency based on the first latency. Correspondingly, the second device receives the latency adjustment request information from the first device.

The first preset threshold is a threshold of the uplink latency.

Optionally, the first device may send the latency adjustment request information to the second device via a fourth device.

The fourth device may be an SMF.

Step 303: The second device adjusts the configuration information of the downlink latency based on the first latency.

Optionally, the second device may adjust the configuration information of the downlink latency by adjusting the QoS policy.

In an optional implementation, after adjusting the configuration information of the downlink latency, the second device sends update information to the fourth device, where the update information is used to update configuration information of an adjusted downlink latency, the update information includes the configuration information of the adjusted downlink latency, and a sum of the first latency and the adjusted downlink latency is less than or equal to an RTT latency requirement.

Optionally, the fourth device may initiate a PDU session modification procedure, and modify QoS configuration information of a PDU session based on the update information, to update the configuration information of the adjusted downlink latency.

In an optional implementation, the second device may send response information to the first device, where the response information includes configuration information of an adjusted downlink latency.

With the foregoing communication method, an RTT latency can be controlled at a PDU set granularity, so as to ensure an MTP latency, thereby improving user experience during use of an XR service such as XR game, XR telemedicine, or XR remote education, cloud game, or the like. For example, during real-time data transmission of the XR service such as XR game or XR remote education, cloud game, or the like, a downlink latency may be adjusted based on an uplink latency, so that the uplink and downlink latencies meet the latency requirement, thereby ensuring smoothness of game or teaching videos, and improving user experience. For another example, in XR telemedicine, during quality inspection, maintenance, or test of an XR device, a downlink latency may be adjusted based on an uplink latency, so that the uplink and downlink latencies meet the latency requirement, and the XR device ensures real-time transmission of medical images when being used for XR telemedicine, thereby improving user experience.

Based on the foregoing embodiment, the following describes, by using specific examples, the communication method provided in embodiments of this application. In the following examples, an access network device is a RAN, a terminal device is UE, a first device is a UPF, a second device is a PCF, a third device is an AF, and a fourth device is an SMF, for example. In the following examples, a downlink frame sent to the UE is a first downlink frame, for example.

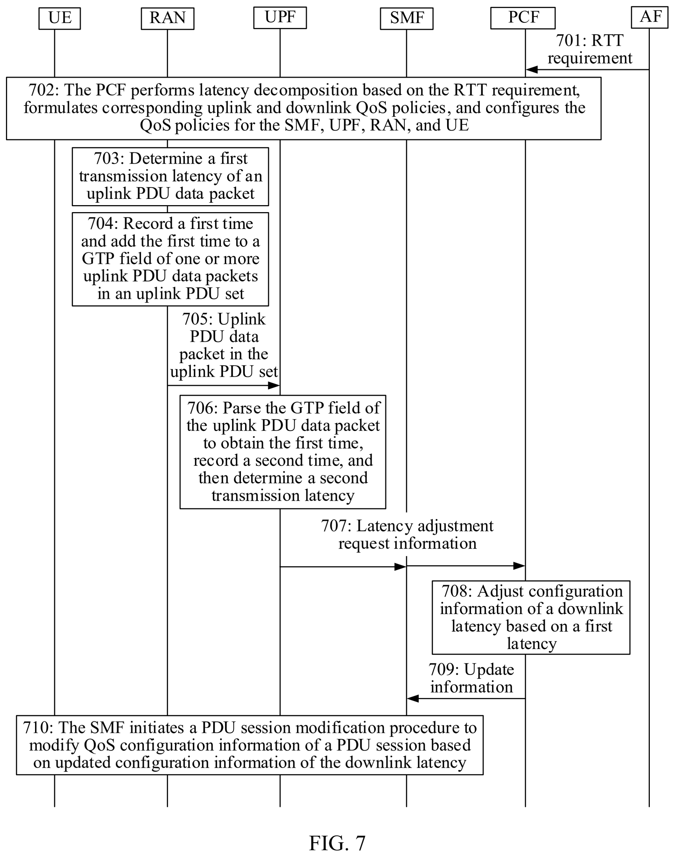

FIG. 7 shows an example of a communication method. In this example, one uplink PDU set corresponds to, for example, a first downlink frame. For example, refer to the example shown in FIG. 4. For example, an example procedure of the communication method may include the following steps.

Step 701: The AF sends an RTT requirement to the PCF.

Step 702: The PCF performs latency decomposition based on the RTT requirement, formulates corresponding uplink and downlink QoS policies, and configures the QoS policies for the SMF, UPF, RAN, and UE.

Latency decomposition refers to decomposition of the RTT requirement into an uplink latency and a downlink latency. A sum of the uplink latency and the downlink latency is less than or equal to the RTT requirement.

The QoS policies sent by the PCF to the SMF, UPF, RAN, and UE include the same latency configuration information, that is, include configuration information of the uplink latency and configuration information of the downlink latency.

Optionally, the QoS policies sent by the PCF to the UPF may further include first configuration information, where the first configuration information may be used to indicate that the UPF needs to determine a transmission latency of an uplink PDU set.

Step 703: The RAN determines, based on a QoS monitoring mechanism, a latency of transmission of an uplink PDU data packet in the uplink PDU set from the UE to the RAN; that is, the RAN determines a first transmission latency of the uplink PDU data packet. The first transmission latency may be an average latency of transmission of all uplink PDU data packets in the uplink PDU set from the UE to the RAN, or may be a latency of transmission of one uplink PDU data packet from the UE to the RAN.

Specifically, for the related description of the first transmission latency, refer to the related description in FIG. 3. Details are not described herein again.

Step 704: The RAN records a first time and adds the first time to a GTP field of one or more uplink PDU data packets in the uplink PDU set, where the first time is a time at which the RAN receives a first uplink PDU data packet in the uplink PDU set.

For example, one uplink PDU set in this example corresponds to a first downlink frame. The uplink PDU data packet in the uplink PDU set includes an identifier of the uplink PDU set. The RAN may identify that the first uplink PDU data packet in the uplink PDU set is received, by identifying that the first uplink PDU data packet that carries the identifier of the uplink PDU set is received.

Step 705: The RAN sends the uplink PDU data packet in the uplink PDU set to the UPF.

Step 706: The UPF parses the GTP field of the uplink PDU data packet to obtain a first time, and records a second time, where the second time is a time at which the UPF receives a last uplink PDU data packet in the uplink PDU set; and then the UPF determines a second transmission latency, where the second transmission latency is a latency of transmission of the uplink PDU set from the RAN to the UPF, which is the second time minus the first time. Therefore, the UPF determines a first latency, which is the first transmission latency plus the second transmission latency.

For example, one uplink PDU set in this example corresponds to the first downlink frame, and the uplink PDU data packet in the uplink PDU set includes the identifier of the uplink PDU set. The UPF may determine, based on a configured data volume of one uplink PDU set, a cumulative data volume that is currently received and that belongs to the same uplink PDU set, so as to determine the last uplink PDU data packet of the one uplink PDU set.

Optionally, when one uplink PDU set corresponds to the first downlink frame, after the UPF sends the uplink PDU data packet in the uplink PDU set to the AF, the AF generates at least one downlink PDU data packet of the first downlink frame based on the uplink PDU set, and sends the at least one downlink PDU data packet of the first downlink frame to the UPF. Then, the UPF sends the at least one downlink PDU data packet of the first downlink frame to the UE.

Step 707: If the first latency exceeds an uplink transmission latency threshold (that is, the foregoing first preset threshold) configured in the QoS policies, the UPF sends latency adjustment request information to the PCF via the SMF, where the latency adjustment request information includes the first latency, and the latency adjustment request information is used to request to adjust the configuration information of the downlink latency based on the first latency.

Step 708: The PCF adjusts the configuration information of the downlink latency based on the first latency.

For example, the PCF may adjust the QoS policies based on the first latency, to update the configuration information of the downlink latency.

Step 709: The PCF sends update information to the SMF, where the update information includes updated configuration information of the downlink latency, and the update information is used to update configuration information of an adjusted downlink latency. A sum of the first latency and the adjusted downlink latency is less than or equal to the RTT latency requirement.

Step 710: The SMF initiates a PDU session modification procedure to modify QoS configuration information of a PDU session based on the updated configuration information of the downlink latency.

Based on the foregoing example, an RTT latency can be controlled at a PDU set granularity, so as to ensure an MTP latency, thereby improving user experience.

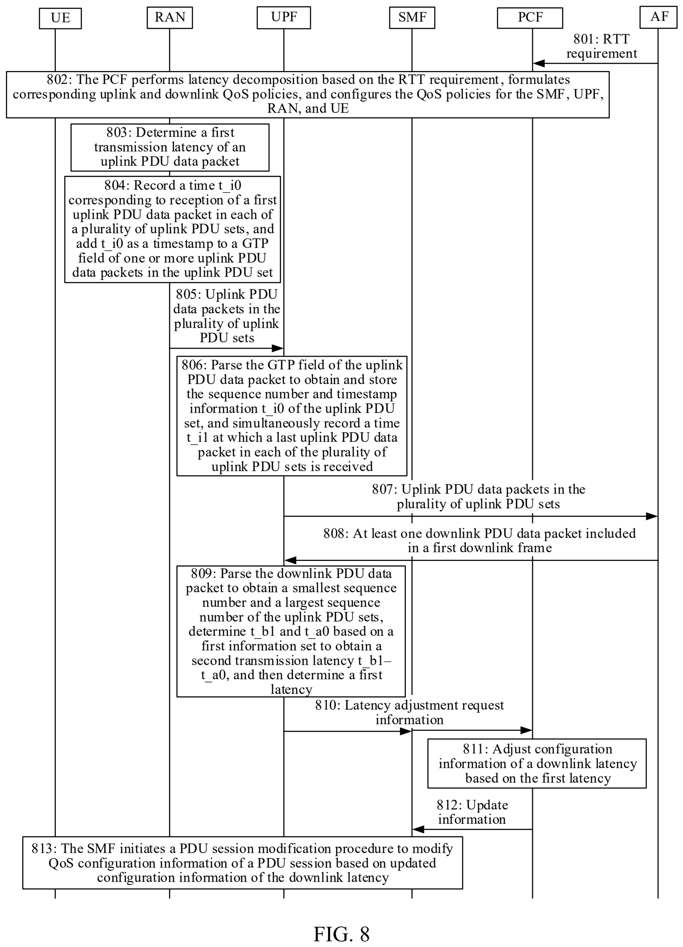

FIG. 8 shows an example of another communication method. In this example, a plurality of uplink PDU sets correspond to, for example, a first downlink frame. For example, refer to the example shown in FIG. 5. In this example, an identifier of a PDU set is, for example, a sequence number of the PDU set. For example, an example procedure of the communication method may include the following steps.

Step 801: The AF sends an RTT requirement to the PCF.

Step 802: The PCF performs latency decomposition based on the RTT requirement, formulates corresponding uplink and downlink QoS policies, and configures the QoS policies for the SMF, UPF, RAN, and UE.

For a specific description, refer to the related description in step 702. Details are not described herein again.

Optionally, the monitoring and adjustment of uplink and downlink latencies may be triggered periodically.

Step 803: The RAN determines, based on a QoS monitoring mechanism, a latency of transmission of an uplink PDU data packet in the plurality of uplink PDU sets from the UE to the RAN; that is, the RAN determines a first transmission latency of the uplink PDU data packet. The first transmission latency may be an average latency of transmission of all uplink PDU data packets in the uplink PDU sets from the UE to the RAN, or may be a latency of transmission of one uplink PDU data packet from the UE to the RAN.

Specifically, for the related description of the first transmission latency, refer to the related description in FIG. 3. Details are not described herein again.

Step 804: The RAN records a time t_i0 corresponding to reception of a first uplink PDU data packet in each of the plurality of uplink PDU sets, and add t_i0 as a timestamp to a GTP field of one or more uplink PDU data packets in the uplink PDU set. i represents a sequence number of the uplink PDU set.

For example, an uplink PDU data packet of an uplink PDU set includes an identifier of the uplink PDU set, for example, a sequence number i. The RAN may identify that the first uplink PDU data packet in the uplink PDU set is received, by identifying that the first uplink PDU data packet that carries the identifier of the uplink PDU set is received, and then record a corresponding t_i0.

Step 805: The RAN sends uplink PDU data packets in the plurality of uplink PDU sets to the UPF.

Step 806: The UPF parses the GTP field of the uplink PDU data packet to obtain and store the sequence number and timestamp information t_i0 of the uplink PDU set, and the UPF simultaneously records a time t_i1 at which a last uplink PDU data packet in each of the plurality of uplink PDU sets is received. The UPF may maintain a first information set, for example, an information table [i, t_i0, t_i1], to record the sequence number i of the uplink PDU set, the time t_i0 corresponding to the first uplink PDU data packet that arrives at the RAN in the uplink PDU set with the sequence number i, and the time t_i1 corresponding to the last uplink PDU data packet that arrives at the UPF in the uplink PDU set with the sequence number i.

Optionally, because the uplink PDU data packet of one uplink PDU set includes the identifier of the uplink PDU set, the UPF may determine, based on a configured data volume of one uplink PDU set, a cumulative data volume that is currently received and that belongs to the same uplink PDU set, so as to determine the last uplink PDU data packet of the one uplink PDU set. In this way, the UPF can determine a time at which the last uplink PDU data packet in each of the plurality of uplink PDU sets is received.

Step 807: The UPF sends the uplink PDU data packets in the plurality of uplink PDU sets to the AF, where at least one of the uplink PDU data packets included in the plurality of uplink PDU sets includes sequence numbers of the plurality of uplink PDU sets.

Step 808: The AF determines a first downlink frame (for example, renders a downlink video frame) based on the uplink PDU data packets (for example, operation instructions) in the plurality of uplink PDU sets, and sends at least one downlink PDU data packet included in the first downlink frame to the UPF, where at least one of the at least one downlink PDU data packet includes the sequence numbers of the plurality of uplink PDU sets.

For example, the sequence numbers of the plurality of uplink PDU sets that are included in the at least one downlink PDU data packet include a smallest sequence number and a largest sequence number in the sequence numbers of the plurality of uplink PDU sets, and the smallest and largest sequence numbers are respectively denoted as a and b. The following describes this example in further detail.

Optionally, the uplink PDU sets are transmitted in sequential order. In other words, the AF may determine the order of the plurality of uplink PDU sets.

For example, the AF may determine that a plurality of uplink PDU sets in a preset time period correspond to one downlink frame. Alternatively, the AF may determine, based on a preset quantity of uplink PDU sets corresponding to one downlink frame, which uplink PDU sets correspond to one downlink frame. In this way, after the AF determines that the plurality of uplink PDU sets for which the first downlink frame can be generated are received, the AF may generate the corresponding first downlink frame, and send the at least one PDU data packet of the first downlink frame to the UPF.

Step 809: The UPF parses the downlink PDU data packet to obtain the smallest sequence number and the largest sequence number of the uplink PDU sets, and determines t_b1 (that is, the foregoing second time) and t_a0 (that is, the foregoing first time) based on the locally stored first information set, obtain a second transmission latency t_b1-t_a0, and then further determine a first latency, which is the first transmission latency plus the second transmission latency.

Specifically, for the first time and the second time, refer to the related description in the foregoing embodiments. Details are not described herein again.

Step 810 to step 813 are similar to step 707 to step 710, and mutual reference may be made to these steps. Details are not described herein again.

Based on the foregoing example, an RTT latency can be controlled at a PDU set granularity, so as to ensure an MTP latency, thereby improving user experience.

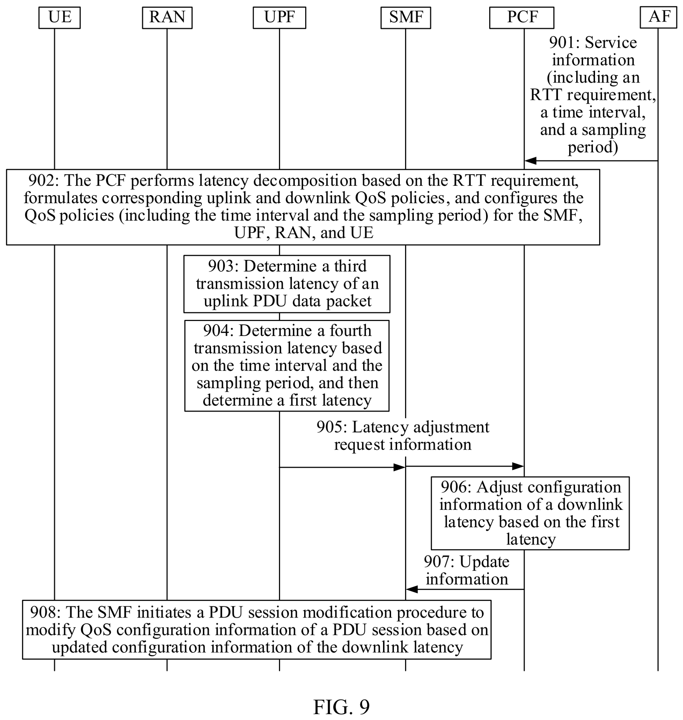

FIG. 9 shows an example of another communication method. In this example, it is assumed that the AF renders the received uplink collected data at a fixed periodicity. For example, the AF determines one downlink frame every N sampling periods. For example, refer to the example shown in FIG. 6. For example, an example procedure of the communication method may include the following steps.

Step 901: The AF sends service information to the PCF, where the service information includes an RTT requirement, a time interval, a sampling period, and the like. The RTT requirement refers to a maximum network transmission latency that can be tolerated by a service (the network transmission latency refers to a sum of uplink and downlink transmission latencies of data between the UE and the UPF). The time interval is a time interval at which the UE sends every two uplink PDU sets, for example, t (that is, the UE sends one uplink PDU set at an interval of t) and a sampling period of the AF, for example, N. The sampling period N of the AF may also be described as a ratio N:1 used when the AF performs rendering of uplink motion instructions (for example, one video frame is periodically rendered every N motion instructions).

Step 902: The PCF performs latency decomposition based on the RTT requirement, formulates corresponding uplink and downlink QoS policies, and configures the QoS policies for the SMF, UPF, RAN, and UE. The QoS policies include the time interval and the sampling period, so that the UPF associates uplink and downlink PDU sets.

Specifically, for the latency decomposition and other configuration information included in the QoS policies, refer to the related description in step 702. Details are not described herein again.

Step 903: The UPF determines, based on a QoS monitoring mechanism, a latency of transmission of an uplink PDU data packet of the N uplink PDU sets from the UE to the UPF; that is, the UPF determines a third transmission latency of the uplink PDU data packet. The third transmission latency may be an average latency of transmission of all uplink PDU data packets of the N uplink PDU sets from the UE to the UPF, or may be a latency of transmission of one uplink PDU data packet from the UE to the UPF.

Step 904: The UPF determines a fourth transmission latency based on the time interval and the sampling period, where the fourth transmission latency is time intervals at which the N uplink PDU sets sequentially arrive at the UPF, and the fourth transmission latency = t*N; and then, the UPF determines a first latency, where the first latency includes the third transmission latency and the fourth transmission latency.

Step 905 to step 908 are similar to step 707 to step 710, and mutual reference may be made to these steps. Details are not described herein again.

Based on the foregoing example, an RTT latency can be controlled at a PDU set granularity, so as to ensure an MTP latency, thereby improving user experience.

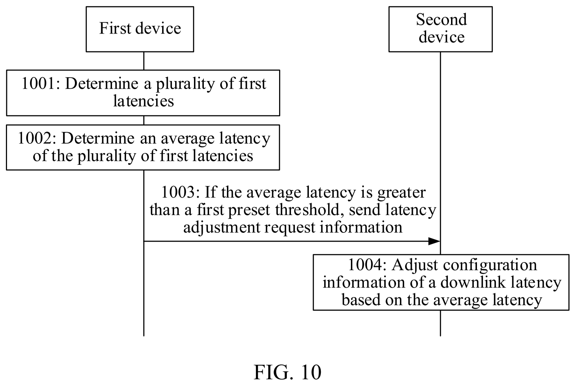

Based on the foregoing description, an embodiment of this application further provides another communication method. Refer to FIG. 10. A specific procedure of the method may include the following steps.

Step 1001: A first device determines a plurality of first latencies, where any one of the plurality of first latencies is a latency of at least one uplink PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service.

The first device may be a UPF.

For the description of the service, refer to the related description in the embodiment shown in FIG. 3. Details are not described herein again.

Optionally, transmission of the at least one uplink PDU set corresponding to one downlink frame (for example, described as one first downlink frame) sent to the terminal device may be understood as one round of transmission, and the first device may determine the plurality of first latencies through a plurality of rounds of transmission.

Specifically, a method for determining any one of the plurality of first latencies by the first device is similar to the method for determining the first latency by the first device in the embodiment shown in FIG. 3, and mutual reference may be made to these methods. Details are not described herein again.

Step 1002: The first device determines an average latency of the plurality of first latencies.

Step 1003: If the average latency is greater than a first preset threshold, the first device sends latency adjustment request information to a second device, where the latency adjustment request information includes the average latency, and the latency adjustment request information is used to request to adjust configuration information of a downlink latency based on the average latency. Correspondingly, the second device receives the latency adjustment request information from the first device.

The first preset threshold is a threshold of an uplink latency.

Optionally, the first device may send the latency adjustment request information to the second device via a fourth device.

The fourth device may be an SMF.

Step 1004: The second device adjusts the configuration information of the downlink latency based on the average latency.

Optionally, a specific method for adjusting, by the second device, the configuration information of the downlink latency based on the average latency is similar to the method for adjusting, by the second device, the configuration information of the downlink latency based on the first latency in step 303 in the embodiment shown in FIG. 3, and mutual reference may be made to these methods. Details are not described herein again.

In an optional implementation, after the second device adjusts the configuration information of the downlink latency, the second device sends update information to the fourth device, where the update information includes configuration information of an updated (also referred to as adjusted) downlink latency, and the update information is used to update the configuration information of the adjusted downlink latency. A sum of the average latency and the adjusted downlink latency is less than or equal to an RTT latency requirement.

For example, the second device sends response information to the first device, where the response information includes the configuration information of the adjusted downlink latency.

With the foregoing communication method, an RTT latency can be controlled at a PDU set granularity, so as to ensure an MTP latency, thereby improving user experience during use of an XR service such as XR game, XR telemedicine, or XR remote education, cloud game, or the like. For details, refer to the related effects described in the embodiment shown in FIG. 3.

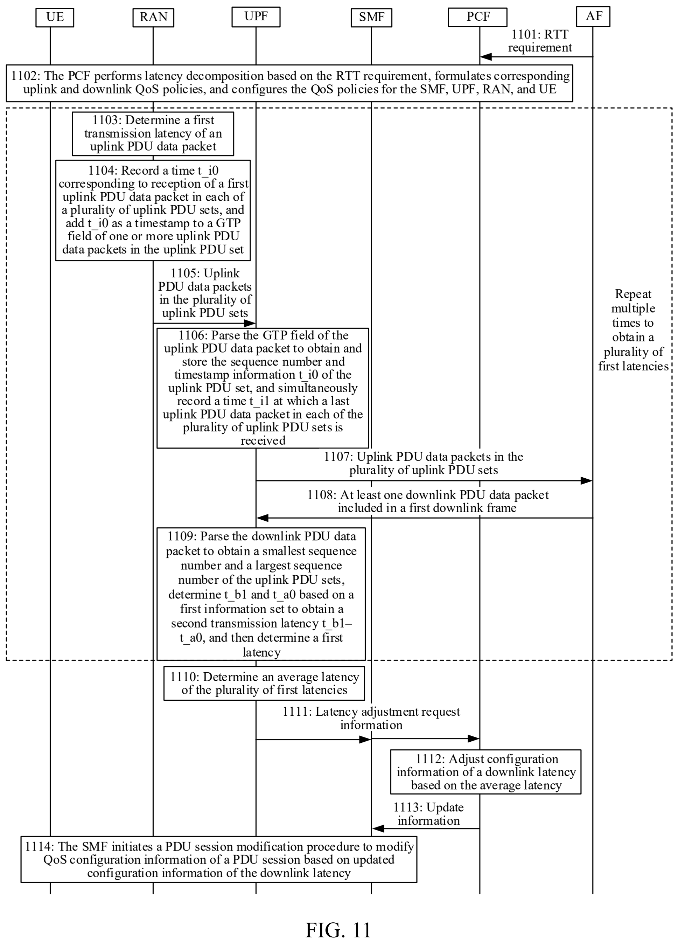

Based on the embodiment shown in FIG. 10, FIG. 11 shows an example of a communication method. In this example, one downlink frame sent to a terminal device is described as, for example, one first downlink frame, and a plurality of uplink PDU sets correspond to, for example, one first downlink frame. For example, refer to the example shown in FIG. 5. In this example, an identifier of a PDU set is, for example, a sequence number of the PDU set. For example, an example procedure of the communication method may include the following steps.

Step 1101 and step 1102 are similar to step 801 and step 802, and mutual reference may be made to these steps. Details are not described herein again.

Step 1103 to step 1109 are similar to step 803 to step 809, and mutual reference may be made to these steps. Details are not described herein again.

The operations of step 1103 to step 1109 are repeated multiple times, and the UPF may obtain a plurality of first latencies. Then, the method proceeds to step 1110.

Step 1110: The UPF determines an average latency of the plurality of first latencies.

Step 1111: If the average latency exceeds an uplink transmission latency threshold (that is, the foregoing first preset threshold) configured in the QoS policies, the UPF sends latency adjustment request information to the PCF via the SMF, where the latency adjustment request information includes the average latency, and the latency adjustment request information is used to request to adjust the configuration information of the downlink latency based on the average latency.

Step 1112: The PCF adjusts the configuration information of the downlink latency based on the average latency.

For example, the PCF may adjust the QoS policies based on the average latency, to update the configuration information of the downlink latency.

Step 1113: The PCF sends update information to the SMF, where the update information includes updated configuration information of the downlink latency, and the update information is used to update configuration information of an adjusted downlink latency. A sum of the average latency and the adjusted downlink latency is less than or equal to an RTT latency requirement.

Step 1114: The SMF initiates a PDU session modification procedure to modify QoS configuration information of a PDU session based on the updated configuration information of the downlink latency.

Based on the foregoing example, an RTT latency can be controlled at a PDU set granularity, so as to ensure an MTP latency, thereby improving user experience.

It should be noted that the example shown in FIG. 11 merely shows one method for determining the first latency, and another method for determining the first latency may be possible. Examples are not numerated herein.

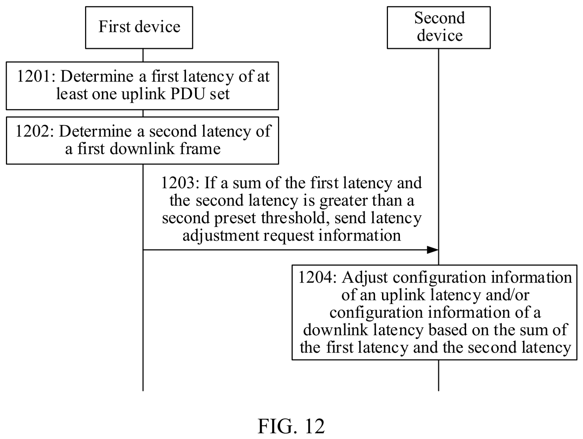

Based on the foregoing description, an embodiment of this application further provides another communication method. Refer to FIG. 12. A specific procedure of the method may include the following steps.

Step 1201: A first device determines a first latency of at least one uplink PDU set, where the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service.

For the description of the service, refer to the related description in the embodiment shown in FIG. 3. Details are not described herein again.

Specifically, for a method for determining the first latency of the at least one uplink PDU set by the first device, refer to the related description in the embodiment shown in FIG. 3. Details are not described herein again.

Step 1202: The first device determines a second latency of the downlink frame corresponding to the at least one uplink PDU set.

For example, in the following description, the downlink frame corresponding to the at least one uplink PDU set is described as a first downlink frame.

As described in the embodiment shown in FIG. 3, the first device sends uplink PDU data packets of the at least one uplink PDU set to a third device, where at least one of the uplink PDU data packets included in the at least one uplink PDU set includes an identifier of the at least one uplink PDU set.

Optionally, the third device generates, based on the uplink PDU data packet included in the at least one uplink PDU set, at least one downlink PDU data packet included in the first downlink frame, and sends the at least one downlink PDU data packet included in the first downlink frame to the first device, where at least one of the at least one downlink PDU data packet includes the identifier of the at least one uplink PDU set.

Then, the first device sends the at least one downlink PDU data packet of the first downlink frame to the terminal device via an access network device.

Based on this, in an optional implementation d1, the first device records a fourth time and a fifth time, where the fourth time is a time at which the first device receives a first one of the at least one downlink PDU data packet included in the first downlink frame, and the fifth time is a time at which the first device completes sending of a last one of the at least one downlink PDU data packet included in the first downlink frame.

Further, the first device may determine the second latency of the first downlink frame by using the following method: The first device obtains a fifth transmission latency of the downlink PDU data packet, where the fifth transmission latency is a transmission latency of the downlink PDU data packet included in the first downlink frame between the terminal device and the first device; and the first device determines the second latency based on the fourth time, the fifth time, and the fifth transmission latency.

Optionally, the terminal device may determine, based on a QoS monitoring mechanism, a latency of transmission of the downlink PDU data packet of the first downlink frame from the first device to the terminal device, to obtain the fifth transmission latency, and then the terminal device sends the fifth transmission latency to the first device. For example, the terminal device sends the fifth transmission latency to the first device via the access network device.

In a possible manner, a method for determining, by the first device, the second latency based on the fourth time, the fifth time, and the third transmission latency may be as follows: The first device determines a sixth transmission latency based on the fourth time and the fifth time. The first device determines the second latency based on the fifth transmission latency and the sixth transmission latency. The sixth transmission latency is a difference obtained by subtracting the fourth time from the fifth time, and the second latency is a sum of the fifth transmission latency and the sixth transmission latency.

In an optional implementation d2, the first device records the fourth time and obtains a sixth time, where the sixth time is a time at which the terminal device receives a last one of the at least one downlink PDU data packet of the first downlink frame; and the first device determines the second latency based on the fourth time and the sixth time. A difference obtained by subtracting the fourth time from the sixth time is the second latency.

For example, the terminal device may record the sixth time, and send the sixth time to the first device. For example, the terminal device sends the sixth time to the first device via the access network device.

Optionally, the terminal device sends third information to the access network device, where the third information includes the sixth time; and the access network device sends the third information to the first device. In other words, the first device receives, from the access network device, the third information originating from the terminal device.

In an example, the terminal device may record all times at which the at least one downlink PDU data packet of the first downlink frame is received, include the times in fourth information, and send the fourth information to the first device via the access network device, where the fourth information further includes a frame identifier of the first downlink frame for ease of identification by the first device. Further, after receiving the fourth information, the first device determines, based on the frame identifier in the fourth information, that all the times correspond to the first downlink frame, and then the first device obtains a largest time in all the times, that is, obtains the sixth time.

Step 1203: If a sum of the first latency and the second latency is greater than a second preset threshold, the first device sends latency adjustment request information to a second device, where the latency adjustment request information includes the sum of the first latency and the second latency, and the latency adjustment request information is used to request to adjust configuration information of an uplink latency and/or a downlink latency based on the sum of the first latency and the second latency. Correspondingly, the second device receives the latency adjustment request information from the first device.

The second preset threshold is a sum of a threshold of the uplink latency and a threshold of the downlink latency.

Optionally, the first device may send the latency adjustment request information to the second device via a fourth device.

The fourth device may be an SMF.

Step 1204: The second device adjusts the configuration information of the uplink latency and/or the configuration information of the downlink latency based on the sum of the first latency and the second latency.

Optionally, the second device may adjust the configuration information of the uplink latency and/or the configuration information of the downlink latency by adjusting QoS policies.

For example, when the second device adjusts the configuration information of the uplink latency based on the sum of the first latency and the second latency, a sum of an adjusted uplink latency and the second latency is less than or equal to the RTT latency requirement. For another example, when the second device adjusts the configuration information of the downlink latency based on the sum of the first latency and the second latency, a sum of an adjusted downlink latency and the first latency is less than or equal to the RTT latency requirement. For another example, when the second device adjusts the configuration information of the uplink latency and the configuration information of the downlink latency based on the sum of the first latency and the second latency, a sum of an adjusted downlink latency and an adjusted uplink latency is less than or equal to the RTT latency requirement.

In an optional implementation, after the second device adjusts the configuration information of the uplink latency and/or the configuration information of the downlink latency, the second device sends update information to the fourth device, where the update information includes updated configuration information of the uplink latency and/or updated configuration information of the downlink latency, and the update information is used to update the configuration information of the adjusted uplink latency and/or the configuration information of the adjusted downlink latency. The sum of the first latency and the adjusted downlink latency is less than or equal to the RTT latency requirement, or the sum of the second latency and the adjusted uplink latency is less than or equal to the RTT latency requirement, or the sum of the adjusted uplink latency and the adjusted downlink uplink latency is less than or equal to the RTT latency requirement.

Optionally, the fourth device may initiate a PDU session modification procedure, and modify QoS configuration information of a PDU session based on the update information, to update the configuration information of the adjusted uplink latency and/or the configuration information of the adjusted downlink latency.

In an optional implementation, the second device may send response information to the first device, where the response information includes the configuration information of the adjusted uplink latency and/or the configuration information of the adjusted downlink latency.

With the foregoing communication method, an RTT latency can be controlled at a PDU set granularity, so as to ensure an MTP latency, thereby improving user experience during use of an XR service such as XR game, XR telemedicine, or XR remote education, cloud game, or the like. For example, during real-time data transmission of the XR service such as XR game or XR remote education, cloud game, or the like, a subsequent uplink latency and/or downlink latency may be adjusted based on a sum of the uplink latency and the downlink latency, so that the uplink and downlink latencies meet the latency requirement, thereby ensuring smoothness of game or teaching videos, and improving user experience. For another example, in XR telemedicine, during quality inspection, maintenance, or test of an XR device, a subsequent uplink latency and/or downlink latency may be adjusted based on a sum of the uplink latency and the downlink latency, so that the uplink and downlink latencies meet the latency requirement, and the XR device ensures real-time transmission of medical images when being used for XR telemedicine, thereby improving user experience.

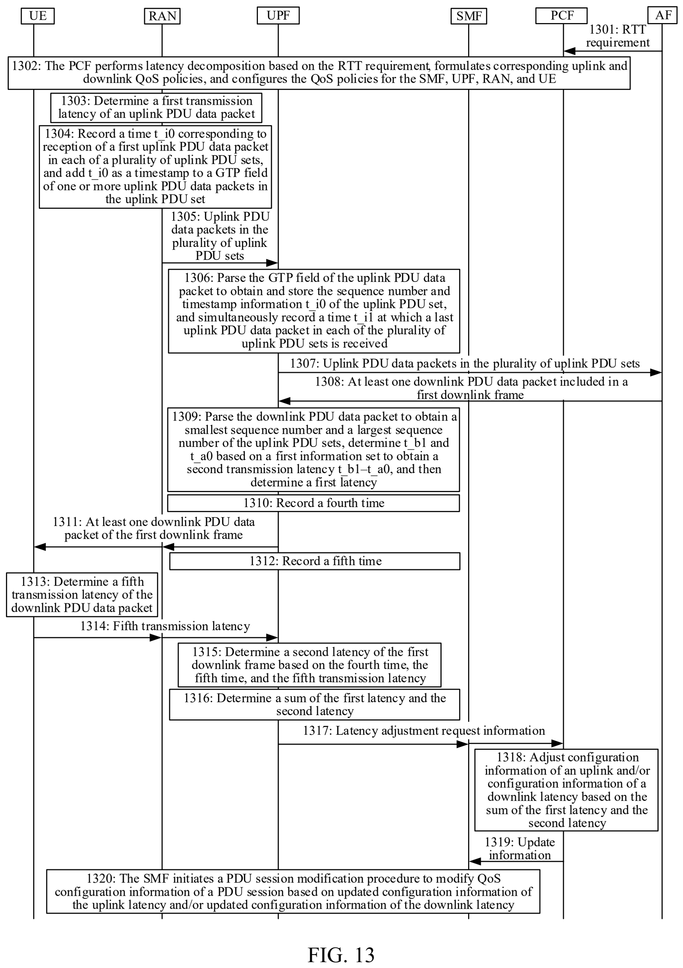

Based on the embodiment shown in FIG. 12, FIG. 13 shows an example of a communication method. In this example, one downlink frame sent to a terminal device is described as, for example, one first downlink frame, and a plurality of uplink PDU sets correspond to, for example, one first downlink frame. For example, refer to the example shown in FIG. 5. In this example, an identifier of a PDU set is, for example, a sequence number of the PDU set. For example, an example procedure of the communication method may include the following steps.

Step 1301 to step 1309 are similar to step 801 to step 809, and mutual reference may be made to these steps. Details are not described herein again.

Step 1310: The UPF records a time at which a first one of the at least one downlink PDU data packet of the first downlink frame is received from the AF; that is, the UPF records a fourth time.

Optionally, the at least one PDU data packet of the first downlink frame carries a frame number of the first downlink frame. The UPF may identify that the first downlink PDU data packet that carries the frame number of the first downlink frame is received, that is, identify the first one of the at least one downlink PDU data packet of the first downlink frame, so as to record the fourth time.

Step 1311: The UPF sends the at least one downlink PDU data packet of the first downlink frame to the UE via the RAN.

Step 1312: The UPF records a time at which sending of a last one of the at least one downlink PDU data packet of the first downlink frame is completed; that is, the UPF records a fifth time.

Optionally, the UPF may determine, based on a configured data volume of one downlink frame, a cumulative data volume that is currently received and that belongs to the same downlink frame, so as to determine the last downlink PDU data packet of the one downlink frame. In this way, the UPF can determine the time at which the last one of the at least one downlink PDU data packet of the first downlink frame is received, so as to determine the time at which the sending of the last downlink PDU data packet is completed.

Step 1313: The UE determines, based on a QoS monitoring mechanism, a latency of transmission of a downlink PDU data packet of the first downlink frame from the UPF to the UE; that is, the UE determines a fifth transmission latency of the downlink PDU data packet. The fifth transmission latency may be an average latency of transmission of all downlink PDU data packets of the first downlink frame from the UPF to the UE, or may be a latency of transmission of one downlink PDU data packet from the UPF to the UE.

Step 1314: The UE sends the fifth transmission latency to the UPF via the RAN.

Step 1315: The UPF determines a second latency of the first downlink frame based on the fourth time, the fifth time, and the fifth transmission latency.

For details, refer to the related description in the embodiment shown in FIG. 12.

Step 1316: The UPF determines a sum of the first latency and the second latency.

Step 1317: If the sum of the first latency and the second latency is greater than a second preset threshold, the UPF sends latency adjustment request information to the PCF via the SMF, where the latency adjustment request information includes the sum of the first latency and the second latency, and the latency adjustment request information is used to request to adjust configuration information of an uplink latency and/or a downlink latency based on the sum of the first latency and the second latency.

Step 1318: The PCF adjusts configuration information of an uplink latency and/or configuration information of a downlink latency based on the sum of the first latency and the second latency.

For example, the PCF may adjust the QoS policies based on the sum of the first latency and the second latency, to update the configuration information of the uplink latency and/or the configuration information of the downlink latency.

Step 1319: The PCF sends update information to the SMF, where the update information includes updated configuration information of the uplink latency and/or configuration information of the downlink latency, the update information is used to update configuration information of an adjusted uplink latency and/or configuration information of an adjusted downlink latency, and the sum of the first latency and the adjusted downlink latency is less than or equal to the RTT latency requirement, or the sum of the second latency and the adjusted uplink latency is less than or equal to the RTT latency requirement, or the sum of the adjusted uplink latency and the adjusted downlink uplink latency is less than or equal to the RTT latency requirement.

Step 1320: The SMF initiates a PDU session modification procedure to modify QoS configuration information of a PDU session based on the updated configuration information of the uplink latency and/or configuration information of the downlink latency.

Based on the foregoing example, an RTT latency can be controlled at a PDU set granularity, so as to ensure an MTP latency, thereby improving user experience.

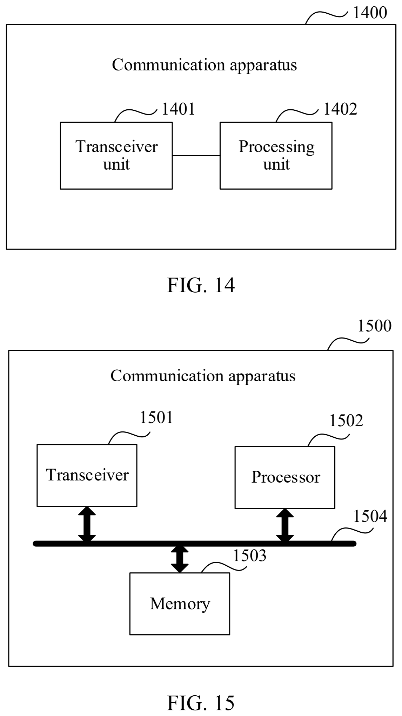

Based on the foregoing embodiments, an embodiment of this application further provides a communication apparatus. As shown in FIG. 14, a communication apparatus 1400 may include a transceiver unit 1401 and a processing unit 1402. The transceiver unit 1401 is configured for the communication apparatus 1400 to receive a message (information or data) or send a message (information or data), and the processing unit 1402 is configured to control and manage actions of the communication apparatus 1400. The processing unit 1402 may further control steps performed by the transceiver unit 1401.

For example, the communication apparatus 1400 may be specifically the first device (for example, the UPF), or a processor, a chip, a chip system, a functional module, or the like in the first device in the foregoing embodiments. Alternatively, the communication apparatus 1400 may be specifically the second device (for example, the PCF), or a processor, a chip, a chip system, a functional module, or the like in the second device in the foregoing embodiments. Alternatively, the communication apparatus 1400 may be specifically the third device (for example, the AF), or a processor, a chip, a chip system, a functional module, or the like in the third device in the foregoing embodiments. Alternatively, the communication apparatus 1400 may be specifically the access network device, or a processor, a chip, a chip system, a functional module, or the like in the access network device in the foregoing embodiments.

In an embodiment, when the communication apparatus 1400 is configured to implement the functions of the first device (for example, the UPF) in the embodiments shown in FIG. 3 to FIG. 9:

The processing unit 1402 may be configured to: determine a first latency of at least one uplink protocol data unit PDU set, where the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; and determine that the first latency is greater than a first preset threshold. The transceiver unit 1401 may be configured to: if the first latency is greater than the first preset threshold, send latency adjustment request information, where the latency adjustment request information includes the first latency, and the latency adjustment request information is used to request to adjust configuration information of a downlink latency based on the first latency.

In an optional implementation, the transceiver unit 1401 may be further configured to: obtain, from an access network device, a first transmission latency of the uplink PDU data packet included in the at least one uplink PDU set, where the first transmission latency is a transmission latency of the uplink PDU data packet included in the at least one uplink PDU set between the terminal device and the access network device; and obtain a first time from the access network device, where the first time is a time at which the access network device receives a first uplink PDU data packet of a first one of the at least one uplink PDU set. The processing unit 1402 may be further configured to record a second time, where the second time is a time at which the transceiver unit 1401 receives a last uplink PDU data packet of a last one of the at least one uplink PDU set. Further, when determining the first latency of the at least one uplink PDU set, the processing unit 1402 is configured for the first device to determine the first latency based on the first transmission latency, the first time, and the second time.

Optionally, when obtaining the first time from the access network device, the transceiver unit 1401 is configured to receive, from the access network device, the uplink PDU data packet included in the at least one uplink PDU set, where a general packet radio service GPRS tunneling protocol GTP field of the uplink PDU data packet included in the at least one uplink PDU set carries the first time; and the processing unit 1402 is configured to obtain the first time carried in the GTP field of the uplink PDU data packet included in the at least one uplink PDU set; or the transceiver unit 1401 is configured to receive first information from the access network device, where the first information includes the first time.

In another optional implementation, the transceiver unit 1401 may be further configured to obtain a third time from the access network device, where the third time is a time at which the terminal device sends a first uplink PDU data packet of a first one of the at least one uplink PDU set. The processing unit 1402 may be further configured to record a second time, where the second time is a time at which the transceiver unit 1401 receives a last uplink PDU data packet of a last one of the at least one uplink PDU set. Further, when determining the first latency of the at least one uplink PDU set, the processing unit 1402 is configured to determine the first latency based on the third time and the second time.

Optionally, when obtaining the third time from the access network device, the transceiver unit 1401 is configured to receive, from the access network device, the uplink PDU data packet included in the at least one uplink PDU set, where a general packet radio service GPRS tunneling protocol GTP field of the uplink PDU data packet included in the at least one uplink PDU set carries the third time; and the processing unit 1402 is configured to obtain the third time carried in the GTP field of the uplink PDU data packet included in the at least one uplink PDU set; or when obtaining the third time from the access network device, the transceiver unit 1401 is configured to receive, from the access network device, second information originating from the terminal device, where the second information includes the third time.

In another optional implementation, the transceiver unit 1401 may be further configured to receive, from a third device, at least one downlink PDU data packet included in the first downlink frame, where at least one of the at least one downlink PDU data packet includes an identifier of the at least one uplink PDU set. The processing unit 1402 may be further configured to determine the at least one uplink PDU set based on the identifier of the at least one uplink PDU set that is included in the at least one downlink PDU data packet.

Optionally, the transceiver unit 1401 may be further configured to obtain, from an access network device, a first transmission latency of the uplink PDU data packet included in the at least one uplink PDU set, where the first transmission latency is a transmission latency of the uplink PDU data packet included in the at least one uplink PDU set between the terminal device and the access network device. The processing unit 1402 may be further configured to obtain a first time and a second time based on the identifier of the at least one uplink PDU set, where the first time is a time at which the access network device receives a first uplink PDU data packet of a first one of the at least one uplink PDU set, and the second time is a time at which the transceiver unit 1401 receives a last uplink PDU data packet of a last one of the at least one uplink PDU set. Further, when determining the first latency of the at least one uplink PDU set, the processing unit 1402 is configured to determine the first latency based on the first transmission latency, the first time, and the second time.

In a possible manner, when obtaining the first time and the second time based on the identifier of the at least one uplink PDU set, the processing unit 1402 is configured to: determine an identifier of the first one of the at least one uplink PDU set and an identifier of the last one of the at least one uplink PDU set based on the identifier of the at least one uplink PDU set; obtaining the first time based on the identifier of the first one of the at least one uplink PDU set and a first information set; and obtaining the second time based on the identifier of the last one of the at least one uplink PDU set and the first information set, where the first information set includes a correspondence between an identifier of each of the at least one uplink PDU set, a time at which the access network device receives a first uplink PDU data packet of each of the at least one uplink PDU set, and a time at which the transceiver unit 1401 receives a last uplink PDU data packet of each of the at least one uplink PDU set.

Optionally, the transceiver unit 1401 may be further configured to obtain, from the access network device, the identifier of each of the at least one uplink PDU set and the time at which the access network device receives the first uplink PDU data packet of each of the at least one uplink PDU set. The processing unit 1402 may be further configured to store the first information set.

In an example, when determining the first latency based on the first transmission latency, the first time, and the second time, the processing unit 1402 is configured to: determine a second transmission latency based on the first time and the second time; and determine the first latency based on the first transmission latency and the second transmission latency.

In another optional implementation, when determining the first latency of the at least one uplink PDU set, the processing unit 1402 is configured to: determine a third transmission latency of the uplink PDU data packet included in the at least one uplink PDU set, where the third transmission latency is a transmission latency of the uplink PDU data packet included in the at least one uplink PDU set between the terminal device and the first device; determine a fourth transmission latency based on a time interval and a sampling period, where the time interval is a time interval at which the terminal device sends every two uplink PDU sets, and a value of the sampling period is equal to a quantity of the at least one uplink PDU set; and determine the first latency based on the third transmission latency and the fourth transmission latency.

Optionally, when determining the fourth transmission latency based on the time interval and the sampling period, the processing unit 1402 is configured to multiply the time interval by the sampling period to obtain the fourth transmission latency.

In a possible manner, the transceiver unit 1401 may be further configured to obtain the time interval and the sampling period from a third device.

In an implementation, the transceiver unit 1401 may be further configured to receive response information, where the response information includes configuration information of an adjusted downlink latency.

In an embodiment, when the communication apparatus 1400 is configured to implement the functions of the second device (for example, the PCF) in the embodiments shown in FIG. 3 to FIG. 9:

The transceiver unit 1401 may be configured to receive latency adjustment request information, where the latency adjustment request information includes a first latency, the first latency is a transmission latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; and the processing unit 1402 may be configured to adjust configuration information of a downlink latency based on the first latency.

In an optional implementation, the transceiver unit 1401 may be further configured to: after the processing unit 1402 adjusts the threshold configuration information of the downlink latency, send update information to a fourth device, where the update information is used to update configuration information of an adjusted downlink latency, and a sum of the first latency and the adjusted downlink latency is less than or equal to an RTT latency requirement.

Optionally, the transceiver unit 1401 may be further configured to: receive a time interval and a sampling period from a third device, where the time interval is a time interval at which the terminal device sends every two uplink PDU sets, and a value of the sampling period is equal to a quantity of the at least one uplink PDU set; and send the time interval and the sampling period to the first device.

In an example, the transceiver unit 1401 may be further configured to send response information to the first device, where the response information includes configuration information of an adjusted downlink latency.

In an embodiment, when the communication apparatus 1400 is configured to implement the functions of the access network device (for example, the RAN) in the embodiments shown in FIG. 3 to FIG. 9:

The transceiver unit 1401 may be configured to receive, from a terminal device, an uplink PDU data packet included in at least one uplink PDU set, where a SDAP field of the uplink PDU data packet included in the at least one uplink PDU set carries a third time, and the third time is a time at which the terminal device sends a first uplink PDU data packet of a first one of the at least one uplink PDU set; and the at least one uplink PDU set corresponds to a downlink frame sent to the terminal device, and the at least one uplink PDU set and the downlink frame corresponding to the at least one uplink PDU set correspond to a same service; the processing unit 1402 may be configured to generate a converted uplink PDU data packet included in the at least one uplink PDU set, where a general packet radio service GPRS tunneling protocol GTP field of the converted uplink PDU data packet included in the at least one uplink PDU set carries the third time; and the transceiver unit 1401 may be further configured to send, to a first device, the converted uplink PDU data packet included in the at least one uplink PDU set.

In an embodiment, when the communication apparatus 1400 is configured to implement the functions of the third device (for example, the AF) in the embodiment shown in FIG. 3 or FIG. 8:

The processing unit 1402 may be configured to generate, based on at least one uplink PDU set, at least one downlink PDU data packet included in a downlink frame sent to a terminal device, where at least one of the at least one downlink PDU data packet includes an identifier of the at least one uplink PDU set; and the at least one uplink PDU set corresponds to the downlink frame, any one of the at least one uplink PDU set includes at least one uplink PDU data packet, and the at least one uplink PDU set and the downlink frame corresponding to the at least one uplink PDU set correspond to a same service; and the transceiver unit 1401 may be configured to send the at least one downlink PDU data packet included in the downlink frame to a first device.

In an embodiment, when the communication apparatus 1400 is configured to implement the functions of the third device (for example, the AF) in the embodiment shown in FIG. 3 or FIG. 9:

The processing unit 1402 may be configured to determine a time interval and a sampling period, where the time interval is a time interval at which a terminal device sends every two uplink PDU sets, and a value of the sampling period is equal to a quantity of at least one uplink PDU set; and the at least one uplink PDU set corresponds to a downlink frame sent to the terminal device, any one of the at least one uplink PDU set includes at least one uplink PDU data packet, and the at least one uplink PDU set and the downlink frame corresponding to the at least one uplink PDU set correspond to a same service; and the transceiver unit 1401 may be configured to send the time interval and the sampling period to the first device via a second device.

In another embodiment, when the communication apparatus 1400 is configured to implement the functions of the first device (for example, the UPF) in the embodiments shown in FIG. 10 and FIG. 11:

The processing unit 1402 may be configured to: determine a plurality of first latencies, where any one of the plurality of first latencies is a latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; determine an average latency of the plurality of first latencies; and determine that the average latency is greater than a first preset threshold. The transceiver unit 1401 may be configured to: if the average latency is greater than the first preset threshold, send latency adjustment request information to a second device, where the latency adjustment request information includes the average latency, and the latency adjustment request information is used to request to adjust configuration information of a downlink latency based on the average latency.

In an optional implementation, the transceiver unit 1401 may be further configured to receive, from a third device, at least one downlink PDU data packet included in the downlink frame, where at least one of the at least one downlink PDU data packet includes an identifier of the at least one uplink PDU set. The processing unit 1402 may be further configured to determine the at least one uplink PDU set based on the identifier of the at least one uplink PDU set that is included in the at least one downlink PDU data packet.

Optionally, the transceiver unit 1401 may be further configured to obtain, from an access network device, a first transmission latency of an uplink PDU data packet included in the at least one uplink PDU set, where the first transmission latency is a transmission latency of the uplink PDU data packet included in the at least one uplink PDU set between the terminal device and the access network device; and the processing unit 1402 may be further configured to obtain a first time and a second time based on the identifier of the at least one uplink PDU set, where the first time is a time at which the access network device receives a first uplink PDU data packet of a first one of the at least one uplink PDU set, and the second time is a time at which the transceiver unit 1401 receives a last uplink PDU data packet of a last one of the at least one uplink PDU set. Further, when determining the first latency in the plurality of first latencies, the processing unit 1402 is configured to determine the first latency based on the first transmission latency, the first time, and the second time.

In an example, when obtaining the first time and the second time based on the identifier of the at least one uplink PDU set, the processing unit 1402 is configured to: determine an identifier of the first one of the at least one uplink PDU set and an identifier of the last one of the at least one uplink PDU set based on the identifier of the at least one uplink PDU set; obtaining the first time based on the identifier of the first one of the at least one uplink PDU set and a first information set; and obtaining the second time based on the identifier of the last one of the at least one uplink PDU set and the first information set, where the first information set includes a correspondence between an identifier of each of the at least one uplink PDU set, a time at which the access network device receives a first uplink PDU data packet of each of the at least one uplink PDU set, and a time at which the first device receives a last uplink PDU data packet of each of the at least one uplink PDU set.

Optionally, the transceiver unit 1401 may be further configured to obtain, from the access network device, the identifier of each of the at least one uplink PDU set and the time at which the access network device receives the first uplink PDU data packet of each of the at least one uplink PDU set; and the processing unit 1402 may be further configured to store the first information set.

In a possible manner, when determining the first latency based on the first transmission latency, the first time, and the second time, the processing unit 1402 is configured to: determine a second transmission latency based on the first time and the second time; and determine the first latency based on the first transmission latency and the second transmission latency.

In another embodiment, when the communication apparatus 1400 is configured to implement the functions of the second device (for example, the PCF) in the embodiments shown in FIG. 10 and FIG. 11:

The transceiver unit 1401 may be configured to receive latency adjustment request information from a first device, where the latency adjustment request information includes an average latency, the average latency is an average latency of a plurality of first latencies, any one of the plurality of first latencies is a transmission latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; and the processing unit 1402 may be configured to adjust configuration information of a downlink latency based on the average latency.

In an optional implementation, the transceiver unit 1401 may be further configured to: after the processing unit 1402 adjusts the configuration information of the downlink latency, send update information to a fourth device, where the update information is used to update configuration information of an adjusted downlink latency, and a sum of the average latency and the adjusted downlink latency is less than or equal to an RTT latency requirement.

Optionally, the transceiver unit 1401 may be further configured to send response information to the first device, where the response information includes configuration information of an adjusted downlink latency.

In another embodiment, when the communication apparatus 1400 is configured to implement the functions of the first device (for example, the UPF) in the embodiments shown in FIG. 12 and FIG. 13:
The processing unit 1402 may be configured to: determine a first latency of at least one uplink protocol data unit PDU set, where the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service; determine a second latency of the downlink frame corresponding to the at least one uplink PDU set; and determine that a sum of the first latency and the second latency is greater than a second preset threshold. The transceiver unit 1401 may be configured to: if the sum of the first latency and the second latency is greater than the second preset threshold, send latency adjustment request information to a second device, where the latency adjustment request information includes the sum of the first latency and the second latency, and the latency adjustment request information is used to request to adjust configuration information of an uplink latency and/or a downlink latency based on the sum of the first latency and the second latency.

Optionally, the transceiver unit 1401 may be further configured to receive, from a third device, at least one downlink PDU data packet included in the downlink frame, where at least one of the at least one downlink PDU data packet includes an identifier of the at least one uplink PDU set. The processing unit 1402 may be further configured to determine the at least one uplink PDU set based on the identifier of the at least one uplink PDU set that is included in the at least one downlink PDU data packet.

In an optional implementation, the transceiver unit 1401 may be further configured to obtain, from an access network device, a first transmission latency of an uplink PDU data packet included in the at least one uplink PDU set, where the first transmission latency is a transmission latency of the uplink PDU data packet included in the at least one uplink PDU set between the terminal device and the access network device; and the transceiver unit 1401 may be further configured to obtain a first time and a second time based on the identifier of the at least one uplink PDU set, where the first time is a time at which the access network device receives a first uplink PDU data packet of a first one of the at least one uplink PDU set, and the second time is a time at which the first device receives a last uplink PDU data packet of a last one of the at least one uplink PDU set. Further, when determining the first latency of the at least one uplink PDU set, the processing unit 1402 is configured to determine the first latency based on the first transmission latency, the first time, and the second time.

In a possible manner, when obtaining the first time and the second time based on the identifier of the at least one uplink PDU set, the processing unit 1402 is configured to: determine an identifier of the first one of the at least one uplink PDU set and an identifier of the last one of the at least one uplink PDU set based on the identifier of the at least one uplink PDU set; obtaining the first time based on the identifier of the first one of the at least one uplink PDU set and a first information set; and obtaining the second time based on the identifier of the last one of the at least one uplink PDU set and the first information set, where the first information set includes a correspondence between an identifier of each of the at least one uplink PDU set, a time at which the access network device receives a first uplink PDU data packet of each of the at least one uplink PDU set, and a time at which the first device receives a last uplink PDU data packet of each of the at least one uplink PDU set.

Optionally, the transceiver unit 1401 may be further configured to: obtain, from the access network device, the identifier of each of the at least one uplink PDU set and the time at which the access network device receives the first uplink PDU data packet of each of the at least one uplink PDU set, and record the time at which the first device receives the last uplink PDU data packet of each of the at least one uplink PDU set; and the processing unit 1402 may be further configured to store the first information set.

In an example, when determining the first latency based on the first transmission latency, the first time, and the second time, the processing unit 1402 is configured to: determine a second transmission latency based on the first time and the second time; and determine the first latency based on the first transmission latency and the second transmission latency.

In an optional implementation, the processing unit 1402 may be further configured to record a fourth time and a fifth time, where the fourth time is a time at which the first device receives a first one of the at least one downlink PDU data packet included in the downlink frame, and the fifth time is a time at which the first device completes sending of a last one of the at least one downlink PDU data packet included in the downlink frame.

Optionally, when determining the second latency of the downlink frame corresponding to the at least one uplink PDU set, the processing unit 1402 is configured to: obtain a fifth transmission latency of the downlink PDU data packet, where the fifth transmission latency is a transmission latency of the downlink PDU data packet included in the first downlink frame between the terminal device and the first device; and determine the second latency based on the fourth time, the fifth time, and the fifth transmission latency.

In a possible manner, when determining the second latency based on the fourth time, the fifth time, and the third transmission latency, the processing unit 1402 is configured to: determine a sixth transmission latency based on the fourth time and the fifth time; and determine the second latency based on the fifth transmission latency and the sixth transmission latency.

In another embodiment, when the communication apparatus 1400 is configured to implement the functions of the second device (for example, the PCF) in the embodiments shown in FIG. 12 and FIG. 13:
The transceiver unit 1401 may be configured to receive latency adjustment request information from a first device, where the latency adjustment request information includes a sum of a first latency and a second latency, the first latency is a transmission latency of at least one uplink protocol data unit PDU set, the at least one uplink PDU set corresponds to a downlink frame sent to a terminal device, any one of the at least one uplink PDU set includes at least one uplink PDU data packet, and the at least one uplink PDU set and the downlink frame corresponding to the at least one uplink PDU set correspond to a same service. The second latency is a transmission latency of the downlink frame corresponding to the at least one uplink PDU set. The processing unit 1402 may be configured to adjust configuration information of an uplink latency and/or configuration information of a downlink latency based on the sum of the first latency and the second latency.

Optionally, the transceiver unit 1401 may be further configured to: after the processing unit 1402 adjusts the configuration information of the uplink latency and/or the configuration information of the downlink latency, send update information to a fourth device, where the update information is used to update configuration information of an adjusted uplink latency and/or configuration information of an adjusted downlink latency. The sum of the first latency and the adjusted downlink latency is less than or equal to the RTT latency requirement, or the sum of the second latency and the adjusted uplink latency is less than or equal to the RTT latency requirement, or the sum of the adjusted uplink latency and the adjusted downlink uplink latency is less than or equal to the RTT latency requirement.

In a possible manner, the transceiver unit 1401 may be further configured to send response information to the first device, where the response information includes the configuration information of the adjusted uplink latency and/or the configuration information of the adjusted downlink latency.

It should be noted that, in embodiments of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 15, a communication apparatus 1500 may include a transceiver 1501 and a processor 1502. Optionally, the communication apparatus 1500 may further include a memory 1503. The memory 1503 may be disposed inside the communication apparatus 1500, or may be disposed outside the communication apparatus 1500. The processor 1502 may control the transceiver 1501 to receive and send messages, information, data, or the like. The transceiver may be a transceiver or the like.

Specifically, the processor 1502 may be a central processing unit (central processing unit, CPU), a network processor (network processor, NP), or a combination of the CPU and the NP. The processor 1502 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1501, the processor 1502, and the memory 1503 are connected to each other. Optionally, the transceiver 1501, the processor 1502, and the memory 1503 are connected to each other through a bus 1504. The bus 1504 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 15, but this does not mean that there is only one bus or only one type of bus.

In an optional implementation, the memory 1503 is configured to store a program and the like. Specifically, the program may include program code, and the program code includes computer operation instructions. The memory 1503 may include a RAM, and may further include a non-volatile memory (non-volatile memory), for example, one or more magnetic disk memories. The processor 1502 executes an application program stored in the memory 1503, to implement the foregoing functions, to implement functions of the communication apparatus 1500.

For example, the communication apparatus 1500 may be specifically the access network device (for example, the RAN) in the foregoing embodiments, or may be the first device (for example, the UPF) in the foregoing embodiments, or may be the second device (for example, the PCF) in the foregoing embodiments, or may be the third device (for example, the AF) in the foregoing embodiments.

In an embodiment, when the communication apparatus 1500 implements the functions of the first device (for example, the UPF) in the embodiments shown in FIG. 3 to FIG. 9, the transceiver 1501 may implement receiving and sending operations performed by the first device in the embodiments shown in FIG. 3 to FIG. 9, and the processor 1502 may implement other operations performed by the first device in the embodiments shown in FIG. 3 to FIG. 9 except the receiving and sending operations. For specific related descriptions, refer to the related descriptions in the foregoing embodiments shown in FIG. 3 to FIG. 9. Details are not described herein again.

In another embodiment, when the communication apparatus 1500 implements the functions of the second device (for example, the PCF) in the embodiments shown in FIG. 3 to FIG. 9, the transceiver 1501 may implement the receiving and sending operations performed by the second device in the embodiments shown in FIG. 3 to FIG. 9, and the processor 1502 may implement other operations performed by the second device in the embodiments shown in FIG. 3 to FIG. 9 except the receiving and sending operations. For specific related descriptions, refer to the related descriptions in the foregoing embodiments shown in FIG. 3 to FIG. 9. Details are not described herein again.

In another embodiment, when the communication apparatus 1500 implements the functions of the third device (for example, the AF) in the embodiments shown in FIG. 3 to FIG. 9, the transceiver 1501 may implement receiving and sending operations performed by the third device in the embodiments shown in FIG. 3 to FIG. 9, and the processor 1502 may implement other operations performed by the third device in the embodiments shown in FIG. 3 to FIG. 9 except the receiving and sending operations. For specific related descriptions, refer to the related descriptions in the foregoing embodiments shown in FIG. 3 to FIG. 9. Details are not described herein again.

In another embodiment, when the communication apparatus 1500 implements the functions of the access network device (for example, the RAN) in the embodiments shown in FIG. 3 to FIG. 9, the transceiver 1501 may implement receiving and sending operations performed by the access network device in the embodiments shown in FIG. 3 to FIG. 9, and the processor 1502 may implement other operations performed by the access network device in the embodiments shown in FIG. 3 to FIG. 9 except the receiving and sending operations. For specific related descriptions, refer to the related descriptions in the foregoing embodiments shown in FIG. 3 to FIG. 9. Details are not described herein again.

In another embodiment, when the communication apparatus 1500 implements the functions of the first device (for example, the UPF) in the embodiments shown in FIG. 10 and FIG. 11, the transceiver 1501 may implement receiving and sending operations performed by the first device in the embodiments shown in FIG. 10 and FIG. 11, and the processor 1502 may implement other operations performed by the first device in the embodiments shown in FIG. 10 and FIG. 11 except the receiving and sending operations. For specific related descriptions, refer to the related descriptions in the foregoing embodiments shown in FIG. 10 and FIG. 11. Details are not described herein again.

In another embodiment, when the communication apparatus 1500 implements the functions of the second device (for example, the PCF) in the embodiments shown in FIG. 10 and FIG. 11, the transceiver 1501 may implement the receiving and sending operations performed by the second device in the embodiments shown in FIG. 10 and FIG. 11, and the processor 1502 may implement other operations performed by the second device in the embodiments shown in FIG. 10 and FIG. 11 except the receiving and sending operations. For specific related descriptions, refer to the related descriptions in the foregoing embodiments shown in FIG. 10 and FIG. 11. Details are not described herein again.

In another embodiment, when the communication apparatus 1500 implements the functions of the first device (for example, the UPF) in the embodiments shown in FIG. 12 and FIG. 13, the transceiver 1501 may implement receiving and sending operations performed by the first device in the embodiments shown in FIG. 12 and FIG. 13, and the processor 1502 may implement other operations performed by the first device in the embodiments shown in FIG. 12 and FIG. 13 except the receiving and sending operations. For specific related descriptions, refer to the related descriptions in the foregoing embodiments shown in FIG. 12 to FIG. 13. Details are not described herein again.

In another embodiment, when the communication apparatus 1500 implements the functions of the second device (for example, the PCF) in the embodiments shown in FIG. 12 and FIG. 13, the transceiver 1501 may implement the receiving and sending operations performed by the second device in the embodiments shown in FIG. 12 and FIG. 13, and the processor 1502 may implement other operations performed by the second device in the embodiments shown in FIG. 12 and FIG. 13 except the receiving and sending operations. For specific related descriptions, refer to the related descriptions in the foregoing embodiments shown in FIG. 12 to FIG. 13. Details are not described herein again.

Based on the foregoing embodiments, an embodiment of this application provides a communication system. The communication system may include the terminal device, the access network device, the first device, the second device, the third device, and the like in the foregoing embodiments.

An embodiment of this application further provides a computer-readable storage medium. The computer-readable storage medium is configured to store a computer program. When the computer program is executed by a computer, the computer may implement the communication methods provided in the foregoing method embodiments.

An embodiment of this application further provides a computer program product. The computer program product is configured to store a computer program. When the computer program is executed by a computer, the computer may implement the communication methods provided in the foregoing method embodiments.

An embodiment of this application further provides a chip, including a processor. The processor is coupled to a memory, and is configured to invoke a program in the memory to enable the chip to implement the communication methods provided in the foregoing method embodiments.

An embodiment of this application further provides a chip. The chip is coupled to a memory, and the chip is configured to implement the communication methods provided in the foregoing method embodiments.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
determining a first latency of at least one uplink protocol data unit PDU set, wherein the at least one uplink PDU set corresponds to a downlink frame sent to a terminal device, any one of the at least one uplink PDU set comprises at least one uplink PDU data packet, and the at least one uplink PDU set and the downlink frame corresponding to the at least one uplink PDU set correspond to a same service; and
if the first latency is greater than a first preset threshold, sending latency adjustment request information, wherein the latency adjustment request information comprises the first latency, and the latency adjustment request information is used to request to adjust configuration information of a downlink latency based on the first latency.

2. The method according to claim 1, wherein determining the first latency of the at least one uplink PDU set comprises:
obtaining, from an access network device, a first transmission latency of the uplink PDU data packet comprised in the at least one uplink PDU set, wherein the first transmission latency is a transmission latency of the uplink PDU data packet comprised in the at least one uplink PDU set between the terminal device and the access network device;
obtaining a first time from the access network device and recording a second time, wherein the first time is a time at which the access network device receives a first uplink PDU data packet of a first one of the at least one uplink PDU set, and the second time is a time at which a first device receives a last uplink PDU data packet of a last one of the at least one uplink PDU set; and
determining the first latency based on the first transmission latency, the first time, and the second time.

3. The method according to claim 2, wherein obtaining the first time from the access network device comprises:
receiving, from the access network device, the uplink PDU data packet comprised in the at least one uplink PDU set, wherein a general packet radio service GPRS tunneling protocol GTP field of the uplink PDU data packet comprised in the at least one uplink PDU set carries the first time; and obtaining the first time carried in the GTP field of the uplink PDU data packet comprised in the at least one uplink PDU set; or
receiving first information from the access network device, wherein the first information comprises the first time.

4. The method according to claim 1, wherein determining the first latency of the at least one uplink PDU set comprises:
obtaining a third time from an access network device and recording a second time, wherein the third time is a time at which the terminal device sends a first uplink PDU data packet of a first one of the at least one uplink PDU set, and the second time is a time at which a first device receives a last uplink PDU data packet of a last one of the at least one uplink PDU set; and
determining the first latency based on the third time and the second time.

5. The method according to claim 4, wherein obtaining the third time from the access network device comprises:
receiving, from the access network device, the uplink PDU data packet comprised in the at least one uplink PDU set, wherein a general packet radio service GPRS tunneling protocol GTP field of the uplink PDU data packet comprised in the at least one uplink PDU set carries the third time; and obtaining the third time carried in the GTP field of the uplink PDU data packet comprised in the at least one uplink PDU set; or
receiving, from the access network device, second information originating from the terminal device, wherein the second information comprises the third time.

6. The method according to claim 1, wherein the method further comprises:
receiving at least one downlink PDU data packet comprised in the downlink frame, wherein at least one of the at least one downlink PDU data packet comprises an identifier of the at least one uplink PDU set; and
determining the at least one uplink PDU set based on the identifier of the at least one uplink PDU set that is comprised in the at least one downlink PDU data packet.

7. The method according to claim 6, wherein determining, by the first device, the first latency of the at least one uplink PDU set comprises:
obtaining a first transmission latency of the uplink PDU data packet comprised in the at least one uplink PDU set, wherein the first transmission latency is a transmission latency of the uplink PDU data packet comprised in the at least one uplink PDU set between the terminal device and an access network device;
obtaining a first time and a second time based on the identifier of the at least one uplink PDU set, wherein the first time is a time at which the access network device receives a first uplink PDU data packet of a first one of the at least one uplink PDU set, and the second time is a time at which the first device receives a last uplink PDU data packet of a last one of the at least one uplink PDU set; and
determining the first latency based on the first transmission latency, the first time, and the second time.

8. The method according to claim 7, wherein obtaining the first time and the second time based on the identifier of the at least one uplink PDU set comprises:
determining an identifier of the first one of the at least one uplink PDU set and an identifier of the last one of the at least one uplink PDU set based on the identifier of the at least one uplink PDU set;
obtaining the first time based on the identifier of the first one of the at least one uplink PDU set and a first information set; and
obtaining the second time based on the identifier of the last one of the at least one uplink PDU set and the first information set, wherein
the first information set comprises a correspondence between an identifier of each of the at least one uplink PDU set, a time at which the access network device receives a first uplink PDU data packet of each of the at least one uplink PDU set, and a time at which the first device receives a last uplink PDU data packet of each of the at least one uplink PDU set.

9. The method according to claim 8, wherein the method further comprises:
obtaining the identifier of each of the at least one uplink PDU set and the time at which the access network device receives the first uplink PDU data packet of each of the at least one uplink PDU set, and recording the time at which the last uplink PDU data packet of each of the at least one uplink PDU set is received; and
storing the first information set.

10. The method according to claim 2 or 7, wherein determining the first latency based on the first transmission latency, the first time, and the second time comprises:
determining a second transmission latency based on the first time and the second time; and
determining the first latency based on the first transmission latency and the second transmission latency.

11. The method according to claim 1, wherein determining the first latency of the at least one uplink PDU set comprises:
determining a third transmission latency of the uplink PDU data packet comprised in the at least one uplink PDU set, wherein the third transmission latency is a transmission latency of the uplink PDU data packet comprised in the at least one uplink PDU set between the terminal device and a first device;
determining a fourth transmission latency based on a time interval and a sampling period, wherein the time interval is a time interval at which the terminal device sends every two uplink PDU sets, and a value of the sampling period is equal to a quantity of the at least one uplink PDU set; and
determining the first latency based on the third transmission latency and the fourth transmission latency.

12. The method according to claim 11, wherein determining the fourth transmission latency based on the time interval and the sampling period comprises:
multiplying the time interval by the sampling period to obtain the fourth transmission latency.

13. The method according to claim 11 or 12, wherein the method further comprises:
obtaining the time interval and the sampling period that originate from a third device.

14. The method according to any one of claims 1 to 13, wherein the method further comprises:
receiving response information, wherein the response information comprises configuration information of an adjusted downlink latency.

15. A communication method, comprising:
receiving latency adjustment request information, wherein the latency adjustment request information comprises a first latency, the first latency is a transmission latency of at least one uplink protocol data unit PDU set, the at least one uplink PDU set corresponds to a downlink frame sent to a terminal device, any one of the at least one uplink PDU set comprises at least one uplink PDU data packet, and the at least one uplink PDU set and the downlink frame corresponding to the at least one uplink PDU set correspond to a same service; and
adjusting configuration information of a downlink latency based on the first latency.

16. The method according to claim 15, wherein after adjusting the configuration information of the downlink latency, the method further comprises:
sending update information to a fourth device, wherein the update information is used to update configuration information of an adjusted downlink latency, and a sum of the first latency and the adjusted downlink latency is less than or equal to an RTT latency requirement.

17. The method according to claim 15 or 16, wherein the method further comprises:
receiving a time interval and a sampling period from a third device, wherein the time interval is a time interval at which the terminal device sends every two uplink PDU sets, and a value of the sampling period is equal to a quantity of the at least one uplink PDU set; and
sending the time interval and the sampling period to the first device.

18. The method according to any one of claims 15 to 17, wherein the method further comprises:
sending response information, wherein the response information comprises configuration information of an adjusted downlink latency.

19. A communication method, comprising:
receiving, from a terminal device, an uplink PDU data packet comprised in at least one uplink PDU set, wherein a service data adaptation protocol SDAP field of the uplink PDU data packet comprised in the at least one uplink PDU set carries a third time, and the third time is a time at which the terminal device sends a first uplink PDU data packet of a first one of the at least one uplink PDU set; and the at least one uplink PDU set corresponds to a downlink frame sent to the terminal device, and the at least one uplink PDU set and the downlink frame corresponding to the at least one uplink PDU set correspond to a same service;
generating a converted uplink PDU data packet comprised in the at least one uplink PDU set, wherein a general packet radio service GPRS tunneling protocol GTP field of the converted uplink PDU data packet comprised in the at least one uplink PDU set carries the third time; and
sending, to a first device, the converted uplink PDU data packet comprised in the at least one uplink PDU set.

20. A communication method, comprising:
generating, based on at least one uplink PDU set, at least one downlink PDU data packet comprised in a downlink frame sent to a terminal device, wherein at least one of the at least one downlink PDU data packet comprises an identifier of the at least one uplink PDU set; and the at least one uplink PDU set corresponds to the downlink frame, any one of the at least one uplink PDU set comprises at least one uplink PDU data packet, and the at least one uplink PDU set and the downlink frame corresponding to the at least one uplink PDU set correspond to a same service; and
sending the at least one downlink PDU data packet comprised in the downlink frame to a first device.

21. A communication method, comprising:
determining a time interval and a sampling period, wherein the time interval is a time interval at which a terminal device sends every two uplink PDU sets, and a value of the sampling period is equal to a quantity of at least one uplink PDU set; and the at least one uplink PDU set corresponds to a downlink frame sent to the terminal device, any one of the at least one uplink PDU set comprises at least one uplink PDU data packet, and the at least one uplink PDU set and the downlink frame corresponding to the at least one uplink PDU set correspond to a same service; and
sending the time interval and the sampling period to a first device via a second device.

22. A communication apparatus, comprising a memory, a processor, and a transceiver, wherein
the memory is configured to store computer instructions;
the transceiver is configured to receive and send signals; and
the processor is coupled to the memory, and is configured to invoke the computer instructions in the memory, to perform the method according to any one of claims 1 to 14 via the transceiver.

23. A communication apparatus, comprising a memory, a processor, and a transceiver, wherein
the memory is configured to store computer instructions;
the transceiver is configured to receive and send signals; and
the processor is coupled to the memory, and is configured to invoke the computer instructions in the memory, to perform the method according to any one of claims 15 to 18 via the transceiver.

24. A communication apparatus, comprising a memory, a processor, and a transceiver, wherein
the memory is configured to store computer instructions;
the transceiver is configured to receive and send signals; and
the processor is coupled to the memory, and is configured to invoke the computer instructions in the memory, to perform the method according to claim 19 via the transceiver.

25. A communication apparatus, comprising a memory, a processor, and a transceiver, wherein
the memory is configured to store computer instructions;
the transceiver is configured to receive and send signals; and
the processor is coupled to the memory, and is configured to invoke computer instructions in the memory, to perform the method according to claim 20 via the transceiver, or to perform the method according to claim 21 via the transceiver.

26. A computer-readable storage medium, wherein the computer-readable storage medium stores computer-executable instructions, and when the computer-executable instructions are invoked by the computer, the method according to any one of claims 1 to 14, or the method according to any one of claims 15 to 18, or the method according to claim 19, or the method according to claim 20, or the method according to claim 21 is performed.

27. A computer program product, comprising instructions, wherein when the instructions are run on a computer, the method according to any one of claims 1 to 14, or the method according to any one of claims 15 to 18, or the method according to claim 19, or the method according to claim 20, or the method according to claim 21 is performed.

28. A chip, wherein the chip is coupled to a memory, and is configured to read and execute program instructions stored in the memory, to implement the method according to any one of claims 1 to 14, or the method according to any one of claims 15 to 18, or the method according to claim 19, or the method according to claim 20, or the method according to claim 21.
